# EUROPEAN PATENT SPECIFICATION

(11) **EP 4 359 851 B1**
(45) Date of publication and mention of the grant of the patent: **25.02.2026**
(21) Application number: 22773072.8
(22) Date of filing: 29.08.2022
(51) Int. Cl.: G02B 27/01, G02C 7/10, G02F 1/1334

(54) **WAVEGUIDE BASED DISPLAY WITH OPHTHALMIC LENS HAVING EMBEDDED DIMMER**
WELLENLEITERBASIERTE ANZEIGEVORRICHTUNG BESTEHEND AUS OPHTHALMISCHER LINSE MIT EINGEBETTETEM DIMMER
SYSTÈME D'AFFICHAGE À GUIDE D'ONDES AVEC LENTILLE OPHTHLAMIQUE COMPORTANT UN VARIATEUR DE LUMIÈRE INCORPORÉ

(30) Priority: 30.08.2021 US 202163238586 P; 02.03.2022 US 202263315614 P; 14.07.2022 US 202217865359
(43) Date of publication of application: 01.05.2024
(73) Proprietor: META PLATFORMS TECHNOLOGIES, LLC, Menlo Park, CA 94025 (US)
(72) Inventor: SHARMA, Robin, Menlo Park, California 94025 (US); JAMALI, Afsoon, Menlo Park, California 94025 (US)
(74) Representative: Murgitroyd & Company
(86) International application number: PCT/US2022/041903
(87) International publication number: WO 2023/034219

(56) References cited:
- DE-A1- 102018 218 987
- JP-A- 2012 088 472
- US-A1- 2009 033 863
- US-A1- 2013 250 233
- US-A1- 2018 356 639
- US-A1- 2019 227 347
- US-A1- 2022 342 235
- US-A1- 2022 365 370
- US-B1- 11 195 490
- US-B1- 7 369 327
- US-B2- 10 422 989
- US-B2- 10 495 937
- US-B2- 10 739 598

## Description

### TECHNICAL FIELD

The present disclosure relates generally to optical devices and, more specifically, to an ophthalmic lens with an embedded dimmer.

### BACKGROUND

Artificial reality devices, such as a head-mounted displays ("HMDs") or heads-up display ("HUD") devices, have wide applications in various fields, including aviation, engineering design, medical surgery practice, and video gaming, etc. The artificial reality devices may display virtual objects or combine images of real objects with virtual objects, as in augmented reality ("AR"), virtual reality ("VR"), and/or mixed reality ("MR") applications. When implemented for AR and/or MR applications, the artificial reality devices may be at least partially transparent from the perspective of a user, enabling the user to view a surrounding real world environment. When implemented for VR application, the artificial reality devices may be opaque such that the user is substantially immersed in the VR imagery provided via the artificial reality devices. JP 2012 088472 A discloses a head mounted display with a thin light guiding plate and a dimming plate.

### SUMMARY OF THE DISCLOSURE

Consistent with an aspect of the present disclosure, a waveguide based display including an ophthalmic lens is provided. The ophthalmic lens includes a first lens having a first flat surface and a first non-flat surface. The ophthalmic lens also includes a second lens having a second flat surface and a second non-flat surface. The ophthalmic lens also includes a first electrode layer disposed at the first flat surface and a second electrode layer disposed at the second flat surface. The ophthalmic lens also includes a dimming material disposed between the first electrode layer and the second electrode layer, and configured to provide an adjustable dimming effect.

In some embodiments, the first non-flat surface is a convex surface, and the second non-flat surface is a concave surface.

In some embodiments, each of the first electrode layer and the second electrode layer includes at least one of indium tin oxide ("ITO"), Al-doped zinc oxide ("AZO"), graphene, poly(3,4-ethylenedioxythiophene): poly(styrene-sulfonate) ("PEDOT:PSS"), carbon nanotubes, or silver nanowires.

In some embodiments, the dimming material includes an electrically tunable dimming material.

In some embodiments, the dimming material includes a non-electrically tunable dimming material.

In some embodiments, the non-electrically tunable dimming material includes at least one of a photochromic material, a photodichroic material, or a thermochromic material.

Consistent with another aspect of the present disclosure, a waveguide based display including an ophthalmic lens is provided. The ophthalmic lens includes a first lens having a first surface and a second surface, at least one of the first surface or the second surface being a first non-flat surface. The ophthalmic lens includes a second lens having a third surface and a fourth surface, at least one of the third surface or the fourth surface being a second non-flat surface. The ophthalmic lens includes a dimming device disposed between the first lens and the second lens, and configured to provide an adjustable dimming effect. The dimming device includes a dimming material, a first electrode layer disposed at a first side of the dimming material facing the first lens and a second electrode layer disposed at a second side of the dimming material facing the second lens.

In some embodiments, the second surface and the third surface are flat surfaces, the first surface is a convex surface, and the fourth surface is a concave surface.

In some embodiments, the first electrode layer and the second electrode layers are flat electrode layers disposed at the second surface and the third surface, respectively.

In some embodiments, each of the first surface, the second surface, the third surface, and the fourth surface is a curved surface.

In some embodiments, the first electrode layer and the second electrode layers are curved electrode layers disposed at the second surface and the third surface, respectively.

In some embodiments, each of the first surface, the second surface, and the third surface is a curved surface, and the fourth surface is a flat surface.

In some embodiments, the first electrode layer and the second electrode layer are curved electrode layers disposed at the second surface and the third surface, respectively.

In some embodiments, each of the first electrode layer and the second electrode layer includes at least one of indium tin oxide ("ITO"), Al-doped zinc oxide ("AZO"), graphene, poly(3,4-ethylenedioxythiophene): poly(styrene-sulfonate) ("PEDOT:PSS"), carbon nanotubes, or silver nanowires.

In some embodiments, the dimming material includes an electrically tunable dimming material.

In some embodiments, the dimming material includes a non-electrically tunable dimming material.

Consistent with another aspect of the present disclosure, a system is provided. The system includes a light source configured to output an image light. The system also includes a light guide coupled with an in-coupling element and an out-coupling element, and configured to guide the image light to an eye-box region of the system, the light guide having a first side facing the eye-box region and a second side opposite to the first side. The system further includes an ophthalmic lens disposed at the second side of the light guide. The ophthalmic lens includes a first lens having at least one non-flat surface. The ophthalmic lens includes a second lens having at least one non-flat surface. The ophthalmic lens includes a dimming device disposed between the first lens and the second lens, and configured to provide an adjustable dimming effect. The dimming device includes a dimming material, a first electrode layer disposed at a first side of the dimming material facing the first lens and a second electrode layer disposed at a second side of the dimming material facing the second lens.

In some embodiments, the ophthalmic lens is a first ophthalmic lens, and the system further includes a second ophthalmic lens disposed at the first side of the light guide.

In some embodiments, the first ophthalmic lens is configured to provide an adjustable light transmittance, and the second ophthalmic lens is configured to provide a fixed light transmittance.

In some embodiments, the dimming material includes an electrically tunable dimming material and a non-electrically tunable dimming material.

Other aspects of the present disclosure can be understood by those skilled in the art in beam of the description, the claims, and the drawings of the present disclosure. The foregoing general description and the following detailed description are exemplary and explanatory only and are not restrictive of the claims.

### BRIEF DESCRIPTION OF THE DRAWINGS

The following drawings are provided for illustrative purposes according to various disclosed embodiments and are not intended to limit the scope of the present disclosure. In the drawings:
FIG. 1A illustrates a schematic diagram of an artificial reality device, according to an embodiment of the present disclosure;
FIG. 1B schematically illustrates a cross-sectional view of half of the artificial reality device shown in FIG. 1A, according to an embodiment of the present disclosure;
FIG. 1C illustrates an image perceived by a user of the artificial reality device when the artificial reality device shown in FIG. 1A operates in an augmented reality ("AR") or mixed reality ("MR") mode, according to an embodiment of the present disclosure;
FIG. 1D illustrates an image perceived by a user of the artificial reality device when the artificial reality device shown in FIG. 1A operates in a virtual reality ("VR"), according to an embodiment of the present disclosure;
FIG. 2A illustrates a schematic diagram of an ophthalmic lens with an embedded dimming device, according to an embodiment of the present disclosure;
FIG. 2B illustrates a schematic diagram of an ophthalmic lens with an embedded dimming device, according to an embodiment of the present disclosure;
FIG. 2C illustrates a schematic diagram of an ophthalmic lens with an embedded dimming device, according to an embodiment of the present disclosure;
FIG. 2D illustrates a schematic diagram of an ophthalmic lens with an embedded dimming device, according to an embodiment of the present disclosure;
FIGs. 3A and 3B illustrate schematic diagrams of a display system including an ophthalmic lens with an embedded dimming device, according to an embodiment of the present disclosure;
FIG. 3C illustrates a schematic diagram of a display system including an ophthalmic lens with an embedded dimming device, according to an embodiment of the present disclosure;
FIGs. 4A and 4B illustrate schematic diagrams of a dimming device, according to an embodiment of the present disclosure;
FIG. 4C illustrates a schematic diagram of a dimming device, according to an embodiment of the present disclosure;
FIGs. 5A and 5B illustrate schematic diagrams of a dimming device, according to an embodiment of the present disclosure;
FIG. 5C illustrates a schematic diagram of a dimming device, according to an embodiment of the present disclosure;
FIGs. 6A and 6B illustrate schematic diagrams of a dimming device, according to an embodiment of the present disclosure; and
FIG. 6C illustrates a schematic diagram of a dimming device, according to an embodiment of the present disclosure.

### DETAILED DESCRIPTION

Embodiments consistent with the present disclosure will be described with reference to the accompanying drawings, which are merely examples for illustrative purposes and are not intended to limit the scope of the present disclosure. Wherever possible, the same reference numbers are used throughout the drawings to refer to the same or similar parts, and a detailed description thereof may be omitted.

Further, in the present disclosure, the disclosed embodiments and the features of the disclosed embodiments may be combined. The described embodiments are some but not all of the embodiments of the present disclosure. Based on the disclosed embodiments, persons of ordinary skill in the art may derive other embodiments consistent with the present disclosure. For example, modifications, adaptations, substitutions, additions, or other variations may be made based on the disclosed embodiments. Such variations of the disclosed embodiments are still within the scope of the present disclosure. Accordingly, the present disclosure is not limited to the disclosed embodiments. Instead, the scope of the present disclosure is defined by the appended claims.

As used herein, the terms "couple," "coupled," "coupling," or the like may encompass an optical coupling, a mechanical coupling, an electrical coupling, an electromagnetic coupling, or any combination thereof. An "optical coupling" between two optical elements refers to a configuration in which the two optical elements are arranged in an optical series, and a beam output from one optical element may be directly or indirectly received by the other optical element. An optical series refers to optical positioning of a plurality of optical elements in a beam path, such that a beam output from one optical element may be transmitted, reflected, diffracted, converted, modified, or otherwise processed or manipulated by one or more of other optical elements. In some embodiments, the sequence in which the plurality of optical elements are arranged may or may not affect an overall output of the plurality of optical elements. A coupling may be a direct coupling or an indirect coupling (e.g., coupling through an intermediate element).

The phrase "at least one of A or B" may encompass all combinations of A and B, such as A only, B only, or A and B. Likewise, the phrase "at least one of A, B, or C" may encompass all combinations of A, B, and C, such as A only, B only, C only, A and B, A and C, B and C, or A and B and C. The phrase "A and/or B" may be interpreted in a manner similar to that of the phrase "at least one of A or B." For example, the phrase "A and/or B" may encompass all combinations of A and B, such as A only, B only, or A and B. Likewise, the phrase "A, B, and/or C" has a meaning similar to that of the phrase "at least one of A, B, or C." For example, the phrase "A, B, and/or C" may encompass all combinations of A, B, and C, such as A only, B only, C only, A and B, A and C, B and C, or A and B and C.

When a first element is described as "attached," "provided," "formed," "affixed," "mounted," "secured," "connected," "bonded," "recorded," or "disposed," to, on, at, or at least partially in a second element, the first element may be "attached," "provided," "formed," "affixed," "mounted," "secured," "connected," "bonded," "recorded," or "disposed," to, on, at, or at least partially in the second element using any suitable mechanical or non-mechanical manner, such as depositing, coating, etching, bonding, gluing, screwing, press-fitting, snap-fitting, clamping, etc. In addition, the first element may be in direct contact with the second element, or there may be an intermediate element between the first element and the second element. The first element may be disposed at any suitable side of the second element, such as left, right, front, back, top, or bottom.

When the first element is shown or described as being disposed or arranged "on" the second element, term "on" is merely used to indicate an example relative orientation between the first element and the second element. The description may be based on a reference coordinate system shown in a figure, or may be based on a current view or example configuration shown in a figure. For example, when a view shown in a figure is described, the first element may be described as being disposed "on" the second element. It is understood that the term "on" may not necessarily imply that the first element is over the second element in the vertical, gravitational direction. For example, when the assembly of the first element and the second element is turned 180 degrees, the first element may be "under" the second element (or the second element may be "on" the first element). Thus, it is understood that when a figure shows that the first element is "on" the second element, the configuration is merely an illustrative example. The first element may be disposed or arranged at any suitable orientation relative to the second element (e.g., over or above the second element, below or under the second element, left to the second element, right to the second element, behind the second element, in front of the second element, etc.).

When the first element is described as being disposed "on" the second element, the first element may be directly or indirectly disposed on the second element. The first element being directly disposed on the second element indicates that no additional element is disposed between the first element and the second element. The first element being indirectly disposed on the second element indicates that one or more additional elements are disposed between the first element and the second element.

The term "processor" used herein may encompass any suitable processor, such as a central processing unit ("CPU"), a graphics processing unit ("GPU"), an application-specific integrated circuit ("ASIC"), a programmable logic device ("PLD"), or any combination thereof. Other processors not listed above may also be used. A processor may be implemented as software, hardware, firmware, or any combination thereof.

The term "controller" may encompass any suitable electrical circuit, software, or processor configured to generate a control signal for controlling a device, a circuit, an optical element, etc. A "controller" may be implemented as software, hardware, firmware, or any combination thereof. For example, a controller may include a processor, or may be included as a part of a processor.

The term "non-transitory computer-readable medium" may encompass any suitable medium for storing, transferring, communicating, broadcasting, or transmitting data, signal, or information. For example, the non-transitory computer-readable medium may include a memory, a hard disk, a magnetic disk, an optical disk, a tape, etc. The memory may include a read-only memory ("ROM"), a random-access memory ("RAM"), a flash memory, etc.

The term "film," "layer," "coating," or "plate" may include rigid or flexible, self-supporting or free-standing film, layer, coating, or plate, which may be disposed on a supporting substrate or between substrates. The terms "film," "layer," "coating," and "plate" may be interchangeable. The term "film plane" refers to a plane in the film, layer, coating, or plate that is perpendicular to the thickness direction. The film plane may be a plane in the volume of the film, layer, coating, or plate, or may be a surface plane of the film, layer, coating, or plate.

The term "orthogonal" as in "orthogonal polarizations" or the term "orthogonally" as in "orthogonally polarized" means that an inner product of two vectors representing the two polarizations is substantially zero. For example, two beams or beams with orthogonal polarizations (or two orthogonally polarized beams or beams) may be two linearly polarized beams (or beams) with two orthogonal polarization directions (e.g., an x-axis direction and a y-axis direction in a Cartesian coordinate system) or two circularly polarized beams with opposite handednesses (e.g., a left-handed circularly polarized beam and a right-handed circularly polarized beam).

The wavelength ranges, spectra, or bands mentioned in the present disclosure are for illustrative purposes. The disclosed optical device, system, element, assembly, and method may be applied to a visible wavelength band, as well as other wavelength bands, such as an ultraviolet ("UV") wavelength band, an infrared ("IR") wavelength band, or a combination thereof. The term "substantially" or "primarily" used to modify an optical response action, such as transmit, reflect, diffract, block or the like that describes processing of a beam means that a major portion, including all, of a beam is transmitted, reflected, diffracted, or blocked, etc. The major portion may be a predetermined percentage (greater than 50%) of the entire beam, such as 100%, 98%, 90%, 85%, 80%, etc., which may be determined based on specific application needs.

Electrically dimmable optics have been used for increasing the dynamic range of AR and MR devices. It is desirable support custom prescription lenses for the ametropic population. Integration of dimming technologies with ophthalmic lenses in a process that is scalable and robust is desirable for future artificial reality applications. The present disclosure provides an integration of custom ophthalmic lenses with dimming technology in artificial reality devices.

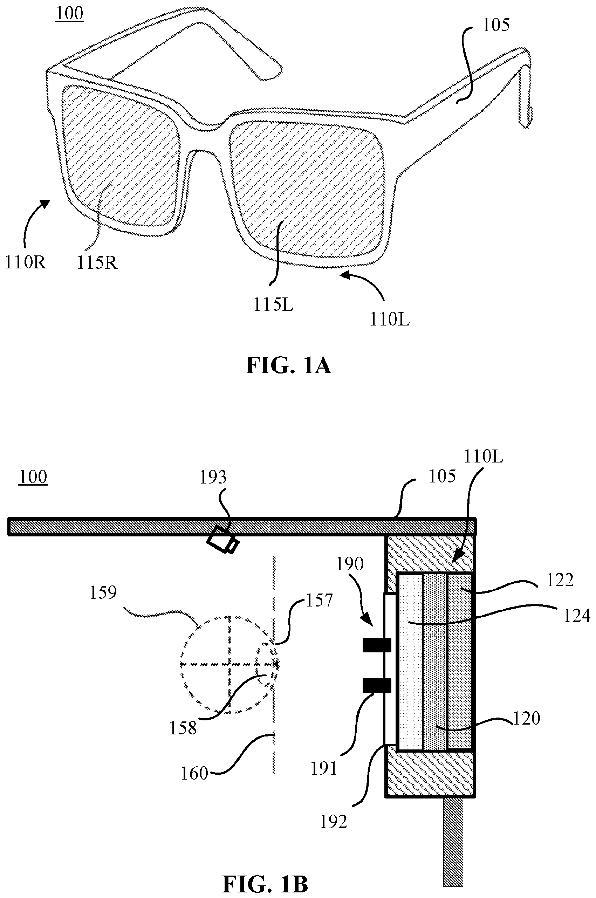

FIG. 1A illustrates a schematic diagram of an artificial reality device 100 according to an embodiment of the present disclosure. In some embodiments, the artificial reality device 100 may produce VR, AR, and/or MR content for a user, such as images, video, audio, or a combination thereof. In some embodiments, the artificial reality device 100 may be smart glasses. In one embodiment, the artificial reality device 100 may be a near-eye display ("NED"). In some embodiments, the artificial reality device 100 may be in the form of eyeglasses, goggles, a helmet, a visor, or some other type of eyewear. In some embodiments, the artificial reality device 100 may be configured to be worn on a head of a user (e.g., by having the form of spectacles or eyeglasses, as shown in FIG. 1A), or to be included as part of a helmet that is worn by the user. In some embodiments, the artificial reality device 100 may be configured for placement in proximity to an eye or eyes of the user at a fixed location in front of the eye(s), without being mounted to the head of the user. In some embodiments, the artificial reality device 100 may be in a form of eyeglasses which provide vision correction to a user's eyesight. In some embodiments, the artificial reality device 100 may be in a form of sunglasses which protect the eyes of the user from the bright sunlight. The artificial reality device 100 may be in a form of safety glasses which protect the eyes of the user. In some embodiments, the artificial reality device 100 may be in a form of a night vision device or infrared goggles to enhance a user's vision at night.

For discussion purposes, FIG. 1A shows that the artificial reality device 100 includes a frame 105 configured to mount to a user's head, and left-eye and right-eye display systems 110L and 110R mounted to the frame 105. FIG. 1B is a cross-sectional view of half of the artificial reality device 100 shown in FIG. 1A according to an embodiment of the present disclosure. For illustrative purposes, FIG. 1B shows the cross-sectional view associated with a left-eye display system 110L. The frame 105 is merely an example structure to which various components of the artificial reality device 100 may be mounted. Other suitable type of fixtures may be used in place of or in combination with the frame 105.

In some embodiments, the left-eye and right-eye display systems 110L and 110R may include suitable image display components 120 configured to project computer-generated virtual images into left and right display windows 115L and 115R. The image display components 120 and/or the left and right display windows 115L and 115R may determine a size of a field of view ("FOV"). In some embodiments, the left-eye and right-eye display systems 110L and 110R may also include one or more suitable optical elements configured to guide an image light (representing a computer-generated virtual image) output from the image display components 120 to one or more exit pupils 157 within an eye-box region 160. In each of the left-eye and right-eye display systems 110L and 110R, one or more suitable optical elements may be disposed between the image display component 120 and the eye-box region 160. An exit pupil 157 may be a location where an eye pupil 158 of the eye 159 of the user may be positioned in the eye-box region 160 of the left-eye display system 110L. In some embodiments, the one or more suitable optical elements (e.g., a lens or a lens assembly 124) may also be configured to perform a suitable optical adjustment of an image light output from the image display component 120, e.g., correct aberrations in the image light, focus the image light to the one or more exit pupils 157, adjust a position of the focal point of the image light in the eye-box region 160, etc.

In some embodiments, as shown in FIG. 1B, the left-eye and right-eye display systems 110L and 110R may include one or more ophthalmic lenses (also referred to as prescription lenses) 122 and 124, e.g., single vision, bifocal, trifocal, or progressive, to provide vision correction to a user's eyesight. For example, the ophthalmic lens 124 may be configured to transmit the image light (representing a computer-generated virtual image) to the user wearing the artificial reality device 100. In some embodiments, the transmitted image light may be altered by the ophthalmic lens 124 to provide vision correction to the user's eyesight. In some embodiments, the transmitted image light may not be altered by the ophthalmic lens 124, e.g., the ophthalmic lens 124 may function as a flat slab or a curved slab with zero optical power for the image light.

In some embodiments, the ophthalmic lenses 122 and 124 may be configured to transmit an ambient light (or a real world light) to the user wearing the artificial reality device 100. In some embodiments, the ophthalmic lenses 122 and 124 may be configured to alter the ambient light while transmitting the ambient light, to provide vision correction to the user's eyesight. It is understood that in some embodiments, one of the ophthalmic lenses 122 and 124 may not be configured with an optical power. For example, in some embodiments, the ophthalmic lens 122 may alter the ambient light to provide vision correction to the user's eyesight, and the ophthalmic lens 124 may function as a flat slab or a curved slab with zero optical power for the image light. In some embodiment, the ophthalmic lens 124 may provide the vision correction to the user's eyesight, and the ophthalmic lens 122 may function as a flat slab or curved slab with zero optical power. In some embodiments, one of the ophthalmic lenses 122 and 124 may be omitted. For example, in some embodiments, the ophthalmic lens 124 may be omitted.

In some embodiments, as shown in FIG. 1B, the artificial reality device 100 may also include an object tracking assembly 190 (e.g., eye tracking assembly and/or face tracking assembly). The object tracking assembly 190 may include an infrared ("IR") light source 191 configured to emit an IR light to illuminate the eye 159 and/or the face, a deflecting element 192 (such as a grating), and an optical sensor 193 (such as a camera). The deflecting element 192 may deflect (e.g., diffract) the IR light reflected by the eye 159 toward the optical sensor 193. The optical sensor 193 may generate a tracking signal relating to the eye 159 based on the IR light deflected by the deflecting element 192. The tracking signal may be an image of the eye 159. The artificial reality device 100 may include a controller (not shown), which may control various optical elements in the left-eye display systems 110L, and/or the object tracking assembly 190.

The artificial reality device 100 may be configured to operate in a VR mode, an AR mode, an MR mode, or any combination thereof. The artificial reality device 100 may be configured to be switchable among operating in the VR mode, the AR mode, and the MR mode, in both indoor and outdoor environments. The controller may control the switch. In some embodiments, when the artificial reality device 100 operates in the AR or an MR mode, the left-eye and right-eye display systems 110L and 110R may be fully or partially transparent from the perspective of the user, which may provide the user with a view of a surrounding real-world environment. In some embodiments, when the artificial reality device 100 operates in the VR mode, the left-eye and right-eye display systems 110L and 110R may be opaque to block the light from the real-world environment, such that the user may be immersed in the VR imagery based on computer-generated images.

In some embodiments, the ophthalmic lens 122 may include (e.g., may be embedded with) an adaptive or active dimming device configured to dynamically adjust the transmittance of a light from a real world environment (referred to as a real world light) coming from a side of the left-eye display system 110L opposite to the side where the eye is located. The active dimming device may be controlled by the controller to switch the artificial reality device 100 between operating in the VR mode and operating in the AR mode, or between operating in the VR mode and operating in the MR mode. In some embodiments, along with switching between the AR mode and the VR mode, or between the MR mode and the VR mode, the active dimming device may be configured to mitigate differences in intensities of a real-world light and a virtual image light when the artificial reality device 100 operates in the AR or MR mode.

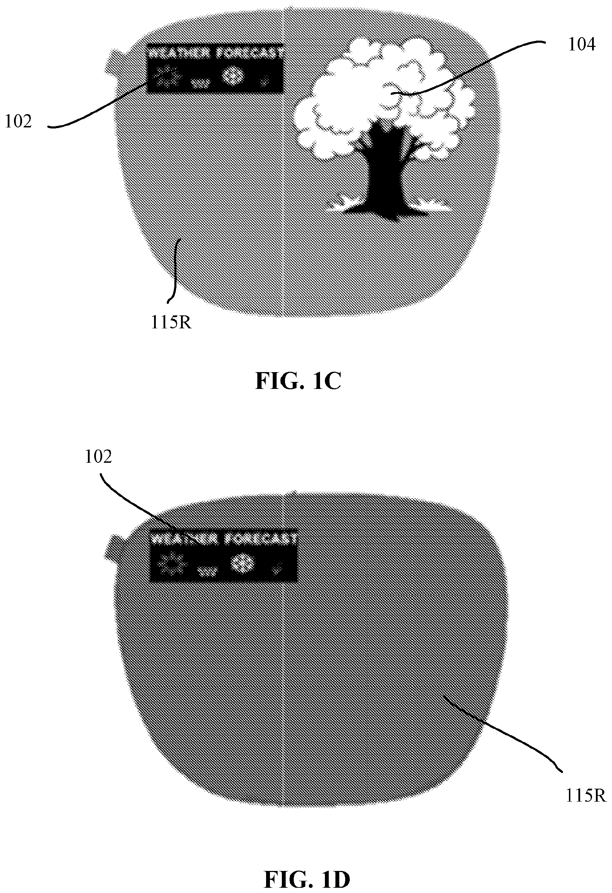

FIG. 1C illustrates an image perceived by a user of the artificial reality device 100 operating in the AR or MR mode, according to an embodiment of the present disclosure. FIG. 1D illustrates an image perceived by a user of the artificial reality device 100 operating in the VR mode, according to an embodiment of the present disclosure. For discussion purposes, FIGs. 1C and 1D show the images viewed through the right display window 115R. As shown in FIG. 1C, when the artificial reality device 100 operates in the AR or MR mode, the user may perceive a virtual scene or virtual image 102 superimposed with a real-world scene 104 when the user looks at the right display window 115R. As shown in FIG. 1D, when the artificial reality device 100 operates in the VR mode, the user may perceive the virtual scene 102, but not the real-world scene 104, when the user looks at the right display window 115R.

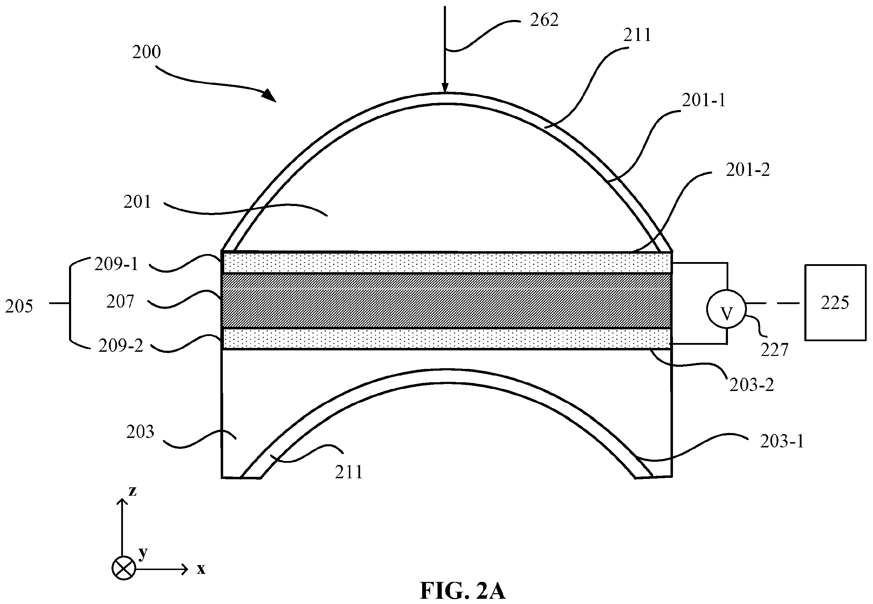

FIG. 2A illustrates a schematic diagram of an ophthalmic lens 200 with an embedded dimmer or dimming device, according to an embodiment of the present disclosure. The ophthalmic lens 200 may be an embodiment of the ophthalmic lens 122 shown in FIG. 1B. In some embodiments, the ophthalmic lens 200 may be an optical instrument or device worn by a user, and the ophthalmic lens 200 may include one or more lenses designed to correct or enhance vision addressing the visual needs of the user. In some embodiments, the ophthalmic lens 200 may provide both of a visual correction function and a dimming function. The ophthalmic lens 200 may be a single vision lens, a bifocal lens, a trifocal lens, or a progressive lens, to provide vision correction to a user's eyesight. In some embodiments, the ophthalmic lens 200 may not provide the visual correction function, and may only provide the dimming function. For example, the ophthalmic lens 200 may have a curved appearance for a cosmetic purpose, with a zero optical power.

As shown in FIG. 2A, the ophthalmic lens 200 may include a first lens 201, a second lens 203, and a dimmer or dimming device 205 disposed between the first lens 201 and the second lens 203. The first lens 201 may face a real-world environment, and the second lens 203 may face the eye of the user. The first lens 201 may be an optical lens configured with a non-planar (or non-flat) surface 201-1 and a planar (or flat) surface 201-2. The aspect ratio of the first lens 201 may be similar to traditional ophthalmic lenses. The non-planar surface 201-1 may be a convex surface or a concave surface. The non-planar surface 201-1 may be a spherical surface, an aspherical surface, a cylindrical surface, or a prismatic surface, etc. The curvature or surface profile of the non-planar surface 201-1 may be configured according to the prescription of the user's eye. In some embodiments, the non-planar surface 201-1 may be disposed with an anti-reflection coating 211.

The second lens 203 may be an optical lens configured with a non-planar (or non-flat) surface 203-1 and a planar (or flat) surface 203-2. The aspect ratio of the second lens 203 may be similar to traditional ophthalmic lenses. The non-planar surface 203-1 may be a convex surface or a concave surface. The non-planar surface 203-1 may be a spherical surface, an aspherical surface, a cylindrical surface, or a prismatic surface, etc. The curvature or surface profile of the non-planar surface 203-1 may be configured according to the prescription of the user. In some embodiments, the non-planar surface 203-1 may be disposed with an anti-reflection coating 211.

The first lens 201 or the second lens 203 may be made of a suitable lens material, such as glass, plastic, or polymer, etc. In some embodiments, the lens material may be optically transparent in the visible spectrum. In some embodiments, the lens material may also be optically transparent in the IR spectrum. For example, the lens material may include glass, polycarbonate ("PC"), polymethyl methacrylate ("PMMA"), polyethylene ("PE"), Polyethylene terephthalate ("PET"), Polyethylene Naphthalate ("PEN"), polypropylene ("PP"), trivex, or a combination thereof. The first lens 201 or the second lens 203 may be fabricated via suitable processes, such as diamond turning, molding, casting, three-dimensional ("3D") printing, or a combination thereof.

For discussion purposes, FIG. 2A shows that the first lens 201 is a plane-convex lens configured with the convex surface 201-1 and the planar surface 201-2, and the second lens 203 is a plano-concave lens configured with the concave surface 203-1 and the planar surface 203-2. In some embodiments, as shown in FIG. 2A, the curvature of the non-planar surface 201-1 of the first lens 201 and the curvature of the non-planar surface 203-1 of the second lens 203 may be configured, such that the ophthalmic lens 200 may function as a concavo-convex lens having a convex surface 201-1 and a concave surface 203-1, and the convex surface 201-1 may have a larger curvature than the concave surface 203-1. The ophthalmic lens 200 shown in FIG. 2A may be configured for far-sightedness correction and dynamic dimming.

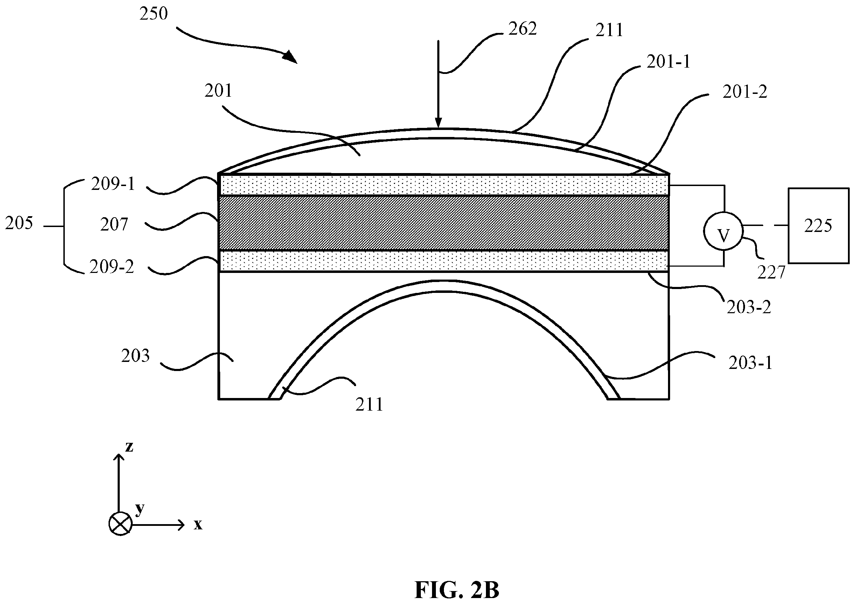

In some embodiments, the curvature of the non-planar surface 201-1 of the first lens 201 and the curvature of the non-planar surface 203-1 of the second lens 203 may be configured, such that the ophthalmic lens 250 may provide another type of vision correction or vision enhancement and dynamic dimming. FIG. 2B illustrates a schematic diagram of an ophthalmic lens 250 with an embedded dimmer or dimming device, according to an embodiment of the present disclosure. The ophthalmic lens 250 may be an embodiment of the ophthalmic lens 122 shown in FIG. 1B. The ophthalmic lens 250 may include elements, structures, and/or functions that are the same as or similar to those included in the ophthalmic lens 200 shown in FIG. 2A. For example, the ophthalmic lens 250 may include the first lens 201, the second lens 203, and the dimming device 205 disposed between the first lens 201 and the second lens 203. In the embodiment shown in FIG. 2B, the curvature of the non-planar surface 201-1 of the first lens 201 and the curvature of the non-planar surface 203-1 of the second lens 203 are configured, such that the ophthalmic lens 250 may function as a convexo-concave lens having the convex surface 201-1 and the concave surface 203-1, and the convex surface 201-1 may have a greater curvature than the concave surface 203-1. The ophthalmic lens 200 shown in FIG. 2B may be configured for near-sightedness correction and dynamic dimming.

Referring to FIGs. 2A and 2B, the dimming device 205 may be disposed between the planar surface 201-2 of the first lens 201 and the planar surface 203-2 of the second lens 203. In some embodiments, the dimming device 205 may be in direct contact with the planar surface 201-2 and the planar surface 203-2. In some embodiments, one or more additional coatings may be disposed between the planar surface 201-2 and the dimming device 205, or disposed between the planar surface 203-2 and the dimming device 205, such as an index-matching layer. The dimming device 205 may be a suitable active dimming device configured to dynamically adjust the transmittance of a visible light from a real-world environment (referred to as a real-world light hereinafter), thereby dynamically adjusting the transmittance of a see-through view observed through the ophthalmic lens 200 (or 250). The dimming device 205 may attenuate or dim an input light via a suitable dimming mechanisms, such as polarization, absorption, scattering, and/or diffusion, etc. The transmittance or the dimming effect of the dimming device 205 may be at least adjustable by adjusting an electric field, under the control of a controller. In some embodiments, the transmittance or the dimming effect of the dimming device 205 may also be adjustable by a suitable external field other than the electric field, e.g., a magnetic field, or a light, etc.

The dimming device 205 includes two electrode layers (or electric conduction layers) 209-1 and 209-2, and a dimming material layer 207 disposed between the two electrode layers 209-1 and 209-2. That is, the two electrode layers 209-1 and 209-2 may be disposed at opposite surfaces of the dimming material layer 207. The two electrode layers 209-1 and 209-2 may be disposed at the planar surface 201-2 and the planar surface 203-2 via a suitable approach (e.g., coating, or deposition, etc.), respectively. In some embodiments, the electrode layers 209-1 and 209-2 may be optically transparent in the visible spectrum. In some embodiments, the electrode layers 209-1 and 209-2 may also be optically transparent in the IR spectrum.

In some embodiments, each of the electrode layers 209-1 and 209-2 may include a continuous planar electrode. In some embodiments, one of the electrode layers 209-1 and 209-2 may include a continuous planar electrode, and the other one of the electrode layers 209-1 and 209-2 may include a patterned electrode formed by a plurality of discrete, separated sub-electrodes. For example, in some embodiments, the patterned electrode may include a first sub-electrode that is surrounded by a second sub-electrode. In some embodiments, the patterned electrode may include an array of pixelated sub-electrodes. In some embodiments, each of the electrode layers 209-1 and 209-2 may include a patterned electrode. For example, in some embodiments, each patterned electrode may include a plurality of separate, striped electrodes arranged in parallel, and the striped electrodes in the respective patterned electrodes may be arranged to extend in parallel in different directions, e.g., orthogonal directions.

In some embodiments, the electrode layers 209-1 and 209-2 may include a conductive material of indium tin oxide ("ITO"), Al-doped zinc oxide ("AZO"), graphene, poly(3,4-ethylenedioxythiophene): poly(styrene-sulfonate) ("PEDOT:PSS"), carbon nanotubes, or silver nanowires, or a combination thereof. In some embodiments, to reduce the surface reflection at an interface between the electrode layer 209-1 and the planar surface 201-2 of the first lens 201, an index-matching layer (not shown) may be disposed between the electrode layer 209-1 and the planar surface 201-2 of the first lens 201. In some embodiments, to reduce the surface reflection at an interface between the electrode layer 209-1 or 209-2 and the corresponding planar surface of the first lens 201 or the second lens 203, an index-matching layer (not shown) may be disposed between the electrode layer 209-2 and the planar surface 203-2 of the second lens 203, and an index-matching layer (not shown) may be disposed between the electrode layer 209-1 and the planar surface 201-2 of the first lens 201.

In some embodiments, the dimming material layer 207 may be configured with a uniform thickness across an aperture of the dimming device 205 (e.g., in the x-axis direction in FIG. 2A). In some embodiments, the dimming material layer 207 may be configured with a non-uniform thickness across the aperture of the dimming device 205. For example, the dimming material layer 207 may have a greater thickness at the center of the aperture than at the periphery of the aperture.

The dimming material layer 207 may include a dimming material having an electrically tunable transmittance (referred to as an electrically tunable dimming material for discussion purposes). The light transmittance of the electrically tunable dimming material may be tunable when an electric field applied to the dimming material is varied, as controlled by a controller. Examples of the electrically tunable dimming material may include a guest-host liquid crystal ("LC") material (e.g., a host LC doped with guest dyes (e.g., dichroic dyes)), a polymer stabilized cholesteric LC material, suspended particles, an electrochromic material, an electrophoretic material, etc. In some embodiments, the dimming material layer 207 may also include a dimming material having a non-electrically tunable transmittance (referred to as a non-electrically tunable dimming material for discussion purposes). The light transmittance of the non-electrically tunable dimming material may be tunable via an approach other than turning a voltage, e.g., by changes in an ambient light, or a temperature, etc. Examples of the non-electrically tunable dimming material may include a photochromic material, a photodichroic material, a thermochromic material, etc. The dimming material layer 207 including both of the electrically tunable dimming material and the non-electrically tunable dimming material may be referred to as a hybrid dimming material layer.

Examples of the dimming device 205 may include a guest-host liquid crystal ("LC") dimming device, a polymer stabilized cholesteric LC dimming device, a suspended particle device, an electrochromic dimming device, an electrophoretic dimming device, an electroplating dimming device, a photochromic dimming device, a photodichroic dimming device, a hybrid dimming device including a hybrid dimming material layer, etc.

In some embodiments, as shown in FIG. 2A and FIG. 2B, a controller 225 may be communicatively coupled with the dimming device 205 to control an operation state of the dimming device 205. For example, the dimming device 205 may be electrically coupled with a power source 227. The controller 225 may control the output (e.g., the voltage or current) of the power source 227 to control the electric field (e.g., an amplitude of and/or a direction of the electric field) in the dimming device 205, thereby controlling the operation state of the dimming device 205. In some embodiments, the controller 225 may control the dimming device 205, such that the dimming device 205 is switchable between operating in a clear state and a dark state (also referred to as an opaque state). In some embodiments, the dimming device 205 operating in the dark state may be configured to substantially block a visible real-world light 262, e.g., with a light transmittance of about 0.01% (or with an optical density of 4.0). Thus, the user may be immersed in the VR imagery based on computer-generated images. The light transmittance of the dimming device 205 operating in the dark state may be referred to as a minimum transmittance of the dimming device 205.

The dimming device 205 operating in the clear state may be configured to provide a predetermined transmittance that is greater than the minimum transmittance to the real-world light 262. In some embodiments, the predetermined transmittance may be within a range from about 30% to about 50%, e.g., 30%, 35%, 40%, 45%, 50%, 30%-40%, 40%-50%, or any other sub-range within the range of 30%-50%. In some embodiments, the predetermined transmittance may be within a range from about 30% to about 60% (e.g., 30%, 35%, 40%, 45%, 50%, 55%, 60%, 30%-40%, 40%-50%, 50%-60%, or any other sub-range within the range of 30%-60%), a range from about 30% to about 70% (e.g., 30%, 35%, 40%, 45%, 50%, 55%, 60%, 65%, 70%, 30%-40%, 40%-50%, 50%-60%, 60%-70%, or any other sub-range within the range of 30%-70%), a range from about 30% to about 80% (e.g., 30%, 35%, 40%, 45%, 50%, 55%, 60%, 65%, 70%, 75%, 80%, 30%-40%, 40%-50%, 50%-60%, 60%-70%, 70%-80%, or any other sub-range within the range of 30%-80%), or a range from about 30% to about 90% (30%, 35%, 40%, 45%, 50%, 55%, 60%, 65%, 70%, 75%, 80%, 85%, 90%, 30%-40%, 40%-50%, 50%-60%, 60%-70%, 70%-80%, 80%-90%, or any other sub-range within the range of 30%-90%), etc. Thus, the user may perceive a virtual scene superimposed with a real-world scene. For discussion purposes, the predetermined transmittance of the dimming device 205 operating in the clear state may be referred to as a maximum transmittance of the dimming device 205. In some embodiments, the controller 225 may also control the dimming device 205 to operate in an intermediate state, in addition to the clear state and the dark state. The dimming device 205 operating in the intermediate state may provide a transmittance that is greater than the minimum transmittance at the dark state, and less than the maximum transmittance at the clear state. Through controlling the transmittance of the dimming device 205, the transmittance of the ophthalmic lens 200 may be controlled. Accordingly, the transmittance of the see-through view observed through the ophthalmic lens 200 may be dynamically adjusted.

In some embodiments, the dimming device 205 may be a global dimming device configured with a light transmittance that is uniform over the entire aperture of the dimming device 205. In other words, the dimming device 205 may be configured to uniformly dim or attenuate the real-world light 262 over the entire aperture of the dimming device 205. In some embodiments, the dimming device 205 may be a regional or local dimming device configured to provide different light transmittances at different regions (or areas) of the aperture of the dimming device 205. The light transmittances at the respective regions or portions may be individually or independently controllable. In some embodiments, each region (or area) of the aperture of the dimming device 205 may include one more pixelated dimming elements. The light transmittances at the respective pixelated dimming elements may be individually or independently controllable. In some embodiments, the size of the respective pixelated dimming element may be greater than 1 millimeter.

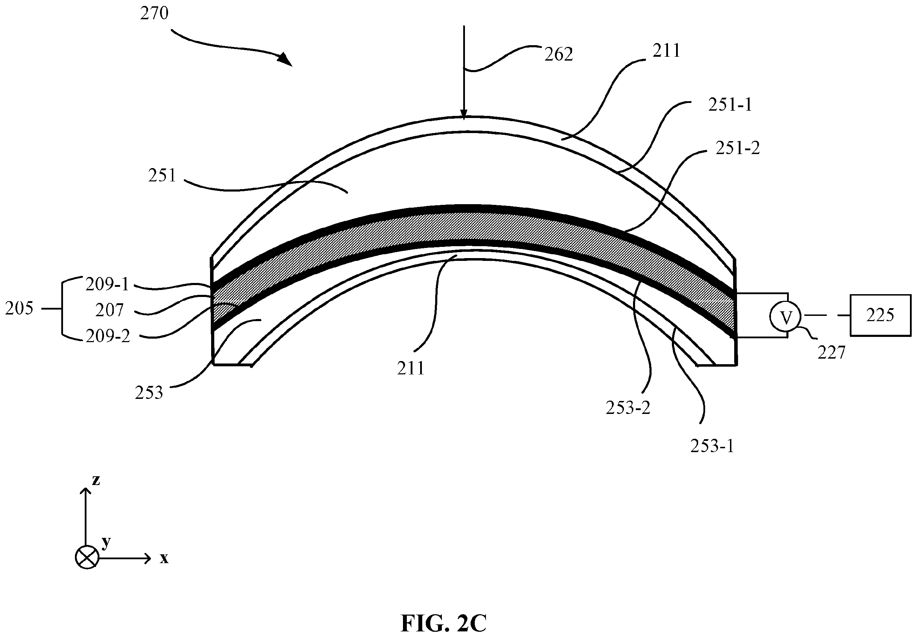

In some embodiments, the dimming device 205 may be configured with at least one curved surface. FIG. 2C illustrates a schematic diagram of an ophthalmic lens 270 with an embedded dimmer or dimming device, according to an embodiment of the present disclosure. The ophthalmic lens 270 may be an embodiment of the ophthalmic lens 122 shown in FIG. 1B. The ophthalmic lens 270 may include elements, structures, and/or functions that are the same as or similar to those included in the ophthalmic lens 200 shown in FIG. 2A, or the ophthalmic lens 250 shown in FIG. 2B. Descriptions of the same or similar elements, structures, and/or functions can refer to the above descriptions rendered in connection with FIG. 2A or FIG. 2B.

As shown in FIG. 2C, the ophthalmic lens 270 may include a first lens 251, a second lens 253, and the dimming device (or dimmer) 205 disposed between the first lens 251 and the second lens 253. The first lens 251 may be an optical lens configured with two opposite non-planar (or non-flat) surfaces, e.g., a first non-planar surface 251-1 and a second non-planar surface 251-2. The aspect ratio of the first lens 251 may be similar to traditional ophthalmic lenses. The first non-planar surface 251-1 or the second non-planar surface 251-2 may be a convex surface or a concave surface. The first non-planar surface 251-1 or the second non-planar surface 251-2 may be a spherical surface, an aspherical surface, a cylindrical surface, or a prismatic surface, etc. The curvatures or surface profiles of the first non-planar surface 251-1 and the second non-planar surface 251-2 may be configured according to the prescription of the user. In some embodiments, the first non-planar surface 251-1 may be disposed with the anti-reflection coating 211.

The second lens 253 may be an optical lens configured with two non-planar (or non-flat) surfaces, e.g., a first non-planar surface 253-1 and a second non-planar surface 253-2. The aspect ratio of the second lens 253 may be similar to traditional ophthalmic lenses. The first non-planar surface 253-1 or the second non-planar surface 253-2 may be a spherical surface, an aspherical surface, a cylindrical surface, or a prismatic surface, etc. The curvatures or surface profiles of the first non-planar surface 253-1 and the second non-planar surface 253-2 may be configured according to the prescription of the user. In some embodiments, the planar surface 253-1 may be disposed with the anti-reflection coating 211.

The first lens 251 or the second lens 253 may be made of a suitable lens material, such as glass, plastic, or polymer, etc. For example, the lens material may include glass, PC, PMMA, PE, PET, PEN, PP, trivex, or a combination thereof. The first lens 251 or the second lens 253 may be fabricated via suitable processes, such as diamond turning, molding, casting, 3D printing, or a combination thereof. For discussion purposes, FIG. 2C shows that the first lens 251 is a concavo-convex lens having a convex surface 251-1 and a concave surface 251-2, and the convex surface 251-1 may have a smaller curvature than the concave surface 251-2. For discussion purposes, FIG. 2C shows that the second lens 253 is a convexo-concave lens having a convex surface 253-2 and a concave surface 253-1, and the convex surface 253-2 may have a greater curvature than the concave surface 253-1. For discussion purposes, FIG. 2C shows that the ophthalmic lens 270 functions as a concavo-convex lens having a convex surface 251-1 and a concave surface 253-1, and the convex surface 251-1 may have a smaller curvature than the concave surface 253-1. The ophthalmic lens 270 shown in FIG. 2C may be configured for far-sightedness correction and dynamic dimming. In some embodiments, the ophthalmic lens 270 may be configured to provide another type of vision correction or vision enhancement and the dynamic dimming.

In the embodiment shown in FIG. 2C, the dimming device 205 disposed between the first lens 251 and the second lens 253 may have two curved surfaces, and the electrode layers 209-1 and 209-2 may be disposed at the curved surfaces of the dimming device 205. Thus, the electrode layers 209-1 and 209-2 may also be curved electrode layers. The dimming material layer 207 may be a curved dimming material layer. The curvature of the electrode layer 209-1 or the curvature of a surface of the dimming material layer 207 facing the electrode layer 209-1 may be substantially the same as the curvature of the concave surface 251-2 of the first lens 251. The curvature of the electrode layer 209-2 or the curvature of a surface of the dimming material layer 207 facing the electrode layer 209-2 may be substantially the same as the curvature of the concave surface 253-2 of the second lens 253. In some embodiments, the dimming material layer 207 may be configured with a uniform thickness across an aperture of the dimming device 205. In some embodiments, the dimming material layer 207 may be configured with a non-uniform thickness across the aperture of the dimming device 205. For example, the dimming material layer 207 may have a greater thickness at the center of the aperture than at the periphery of the aperture.

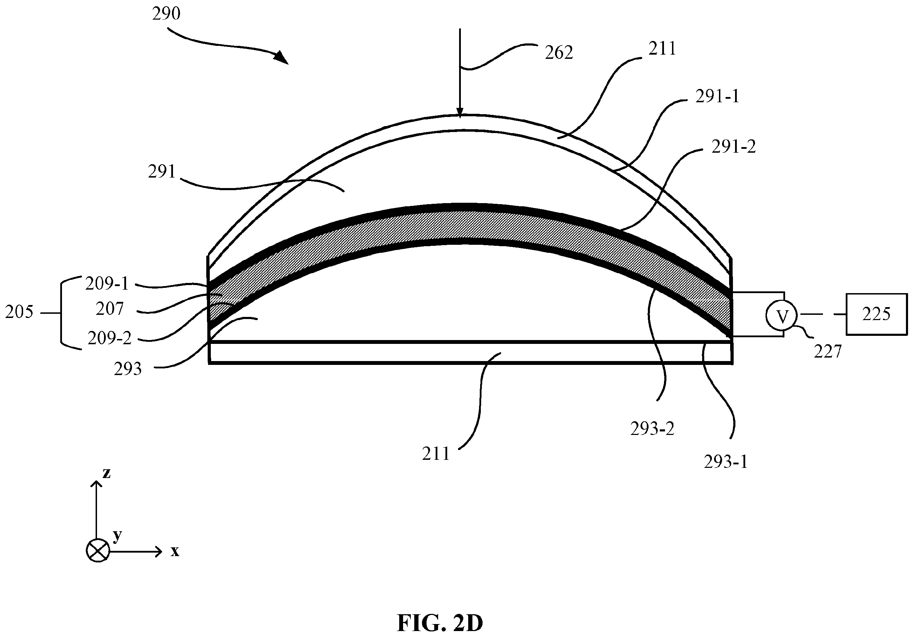

FIG. 2D illustrates a schematic diagram of an ophthalmic lens 290 with an embedded dimmer or dimming device, according to an embodiment of the present disclosure. The ophthalmic lens 290 may be an embodiment of the ophthalmic lens 122 shown in FIG. 1B. The ophthalmic lens 290 may include elements, structures, and/or functions that are the same as or similar to those included in the ophthalmic lens 200 shown in FIG. 2A, the ophthalmic lens 250 shown in FIG. 2B, or the ophthalmic lens 270 shown in FIG. 2C. Descriptions of the same or similar elements, structures, and/or functions can refer to the above descriptions rendered in connection with FIG. 2A, FIG. 2B, or FIG. 2C.

As shown in FIG. 2D, the ophthalmic lens 290 may include a first lens 291, a second lens 293, and the dimming device (or dimmer) 205 disposed between the first lens 291 and the second lens 293. The first lens 291 may be an optical lens configured with two opposite surfaces, e.g., a first surface 291-1 and a second surface 291-2. The second lens 293 may be an optical lens configured with two opposite surfaces, e.g., a first surface 293-1 and a second surface 293-2. The second surface 291-2 and the second surface 293-2 may be the inner surfaces of the respective lenses 291 and 293 that face the dimming device 205. The second surface 291-2 and the second surface 293-2 may be non-planar (or non-flat) surfaces. The first surface 291-1 and the first surface 293-1 may be the outer surfaces of the respective lenses 291 and 293 that face away from the dimming device 205. The curvatures or surface profiles of the first surface 291-1 and the first surface 293-1 may be configured according to the prescription of the user. For discussion purpose, FIG. 2D shows that the first surface 291-1 of the first lens 291 is a convex surface, the first surface 293-1 of the second lens 293 is a flat surface, and the ophthalmic lens 290 may function as a plano-convex lens configured for far-sightedness correction and dynamic dimming. In some embodiments, the first surface 293-1 may be a flat surface. In some embodiments, both of the first surface 291-1 and the first surface 293-1 may be flat surfaces.

The aspect ratio of the first lens 291 may be similar to traditional ophthalmic lenses. In some embodiments, the first surface 291-1 may be disposed with the anti-reflection coating 211. The aspect ratio of the second lens 293 may be similar to traditional ophthalmic lenses. In some embodiments, the planar surface 293-1 may be disposed with the anti-reflection coating 211. The first lens 291 or the second lens 293 may be made of a suitable lens material, such as glass, plastic, or polymer, etc. For example, the lens material may include glass, PC, PMMA, PE, PET, PEN, PP, trivex, or a combination thereof. The first lens 291 or the second lens 293 may be fabricated via suitable processes, such as diamond turning, molding, casting, 3D printing, or a combination thereof. For discussion purposes, FIG. 2D shows that the first lens 291 is a concavo-convex lens having a convex surface 291-1 and a concave surface 291-2, and the convex surface 291-1 may have a larger curvature than the concave surface 291-2. For discussion purposes, FIG. 2D shows that the second lens 293 is a plano-convex lens having a convex surface 293-2 and a planar surface 293-1.

In the embodiment shown in FIG. 2D, the dimming device 205 disposed between the first lens 291 and the second lens 293 may have two curved surfaces. The electrode layers 209-1 and 209-2 may be disposed at the two curved surfaces. Thus, the electrode layers 209-1 and 209-2 may be curved electrode layers. The dimming material layer 207 may be a curved dimming material layer. The curvature of the electrode layer 209-1 or the curvature of a surface of the dimming material layer 207 facing the electrode layer 209-1 may be substantially the same as the curvature of the concave surface 291-2 of the first lens 291. The curvature of the electrode layer 209-2 or the curvature of a surface of the dimming material layer 207 facing the electrode layer 209-2 may be substantially the same as the curvature of the concave surface 293-2 of the second lens 293. In some embodiments, the dimming material layer 207 may be configured with a uniform thickness across an aperture of the dimming device 205. In some embodiments, the dimming material layer 207 may be configured with a non-uniform thickness across the aperture of the dimming device 205. For example, the dimming material layer 207 may have a greater thickness at the center of the aperture than at the periphery of the aperture. In some embodiments, although not shown, the dimming device 205 disposed between the first lens 291 and the second lens 293 may have two flat surfaces, e.g., the electrode layers 209-1 and 209-2 may be flat electrode layers, and the dimming material layer 207 may be a flat dimming material layer.

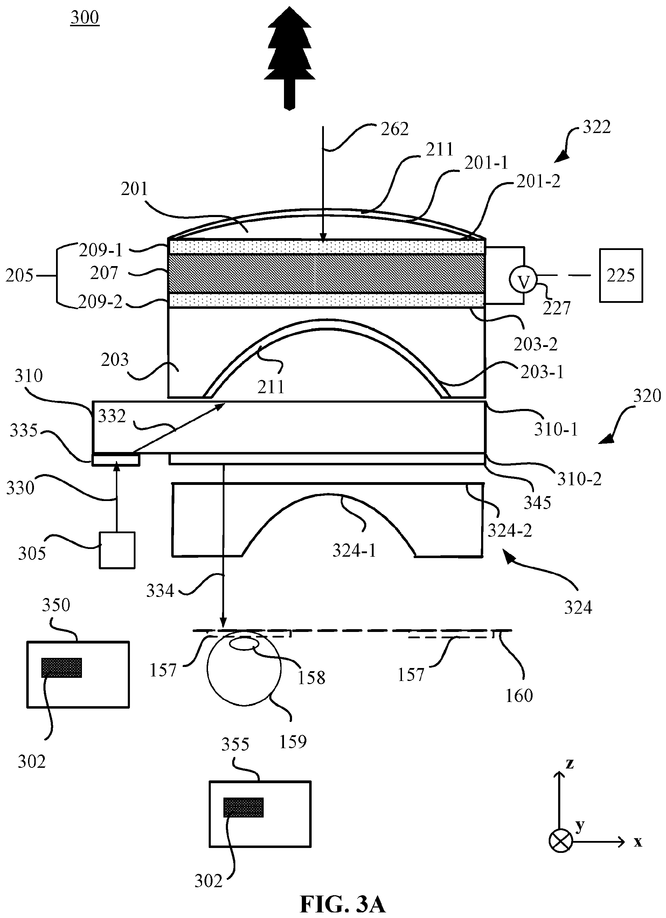

FIG. 3A illustrates an x-z sectional view of a display system 300, according to an embodiment of the present disclosure. The display system 300 may be implemented in an artificial reality device for AR, VR, and/or MR applications, such as the artificial reality device 100 shown in FIGs. 1A-1D. For example, the display system 300 may be an embodiment of the display system 110L or 110R shown in FIGs. 1A and 1B. As shown in FIG. 3A, the display system 300 may include a first ophthalmic lens 322 with an embedded dimming device, a light guide display assembly 320, and a second ophthalmic lens 324 arranged in a stacked configuration. In some embodiments, the display system 300 may include the controller 225 communicatively coupled with the various elements in the first ophthalmic lens 322, the light guide display assembly 320, and/or the second ophthalmic lens 324. The first ophthalmic lens 322 and the second ophthalmic lens 324 may be disposed at opposite sides of the light guide display assembly 320. The second ophthalmic lens 324 may be disposed at a side of the light guide display assembly 320 facing the eye 159, and the first ophthalmic lens 322 may be disposed at a side of the light guide display assembly 320 facing the real-world environment.

The first ophthalmic lens 322, the light guide display assembly 320, and the second ophthalmic lens 324 may be embodiments of the ophthalmic lens 122, the image display components 120, and the ophthalmic lens 124, respectively. The first ophthalmic lens 322 may be an embodiment of the ophthalmic lenses with an embedded dimmer disclosed herein, such as the ophthalmic lens 200 shown in FIG. 2A, the ophthalmic lens 250 shown in FIG. 2B, the ophthalmic lens 270 shown in FIG. 2C, or the ophthalmic lens 290 shown in FIG. 2D. For discussion purposes, FIG. 3A shows that the first ophthalmic lens 322 has a configuration that is the same as or similar to the ophthalmic lens 250 shown in FIG. 2B.

The light guide display assembly 320 includes a light source assembly 305, and a light guide 310 coupled with an in-coupling element 335 and an out-coupling element 345. The light source assembly 305 may be configured to output an image light 330 representing a virtual image 350 (e.g., including a virtual object 302). The light guide 310 coupled with the in-coupling element 335 and the out-coupling element 345 may be configured to guide the image light 330 to one or more exit pupils 157 in the eye-box region 160 of the display system 300. The exit pupil 157 may be a location where an eye pupil 158 of the eye 159 may be positioned in the eye-box region 160. Thus, the eye 159 located at the exit pupil 157 may perceive the virtual image generated by the light source assembly 305. In some embodiments, the in-coupling element 335 may couple the image light 330 into the light guide 310 as the in-coupled image light 332.

The in-coupled image light 332 may propagate inside the light guide 310 through total internal reflection, from the in-coupling element 335 toward the out-coupling element 345. The out-coupling element 345 may couple the in-coupled image light 332 incident onto different portions of the out-coupling element 345 out of the light guide 310 as a plurality of output image lights 334 propagating toward the eye-box region 160. In some embodiments, each output image light 334 may represent or form a virtual image that may be substantially the same as (or may have the same image content as) the virtual image 350 output from the light source assembly 305. Thus, a plurality of the virtual image 350 may be replicated at the outside of the light guide 320 when a plurality of output image lights 334 are out-coupled from the light guide 310 via the out-coupling element 345 toward a plurality of exit pupils 157.

The first ophthalmic lens 322 and the second ophthalmic lens 324 may be configured to correct or enhance vision addressing the visual needs of the user wearing or using an artificial reality system including the display system 300. The first ophthalmic lens 322 and the second ophthalmic lens 324 may be disposed at an output portion of the light guide 310, spatially overlapping with the out-coupling element 345, as shown in FIG. 3A. The first ophthalmic lens 322 and the second ophthalmic lens 324 may be disposed at opposite surfaces of the light guide 310. For discussion purposes, FIG. 3A shows that the first ophthalmic lens 322 and the second ophthalmic lens 324 are spaced apart from the light guide display assembly 320 by gaps. In some embodiments, the first ophthalmic lens 322, the light guide display assembly 320, and the second ophthalmic lens 324 may be stacked with one another without a gap (e.g., through direct contact).

In some embodiments, the first ophthalmic lens 322 may be separately formed and disposed at (e.g., affixed to) a surface of the light guide 310 facing the real-world environment (e.g., a first surface 310-1). In some embodiments, the first ophthalmic lens 322 may be integrally formed as a part of the light guide 310, e.g., the second lens 203 included in the first ophthalmic lens 322 may be integrally formed as a part of the light guide 310. In some embodiments, an area of the first ophthalmic lens 322 may be greater than or equal to an area of the out-coupling element 345. In some embodiments, the first ophthalmic lens 322 and the out-coupling element 345 may be disposed at opposite surfaces of the light guide 310. The light guide 310 may be disposed between the first ophthalmic lens 322 and the out-coupling element 345. In some embodiments, the first ophthalmic lens 322 and the out-coupling element 345 may be disposed at the same surface (e.g., the first surface 310-1) of the light guide 310, with the out-coupling element 345 disposed between the first ophthalmic lens 322 and the light guide 310. The first ophthalmic lens 322 may not interact with the output image light 334 of the light guide 310.

In some embodiments, the second ophthalmic lens 324 may be separately formed and disposed at (e.g., affixed to) a surface (e.g., a second surface 310-2) of the light guide 310 facing the eye-box region 160. In some embodiments, the second ophthalmic lens 324 may be integrally formed as a part of the light guide 310. In some embodiments, an area of the second ophthalmic lens 324 may be greater than or equal to the area of the out-coupling element 345. In some embodiments, the second ophthalmic lens 324 and the out-coupling element 345 may be disposed at opposite surfaces of the light guide 310. The light guide 310 may be disposed between the second ophthalmic lens 324 and the out-coupling element 345. In some embodiments, the second ophthalmic lens 324 and the out-coupling element 345 may be disposed at the same surface (e.g., the second surface 310-2) of the light guide 310, with the out-coupling element 345 disposed between the second ophthalmic lens 324 and the light guide 310. The second ophthalmic lens 324 may receive the output image light 334 from the light guide 310, and guide the output image light 334 to one or more exit pupils 157 in the eye-box region 160.

In some embodiments, although not shown in FIG. 3A, the second ophthalmic lens 324 may alter the output image light 334 to provide vision correction to the user's eyesight, while transmitting the output image light 334. The aspect ratio of the second ophthalmic lens 324 may be similar to traditional ophthalmic lenses. In some embodiments, the second ophthalmic lens 324 may be an optical lens configured with a non-planar (or non-flat) surface 324-1 and a planar (or flat) surface 324-2. The non-planar surface 324-1 may be a convex surface or a concave surface. The non-planar surface 324-1 may be a spherical surface, an aspherical surface, a cylindrical surface, or a prismatic surface, etc. The curvature or surface profile of the non-planar surface 324-1 may be configured according to the prescription of the user. For discussion purpose, FIG. 3A shows that the non-planar surface 324-1 is a concave surface. In some embodiments, the non-planar surface 324-1 may be disposed with the anti-reflection coating 211 (not shown). In some embodiments, the second ophthalmic lens 324 may not alter the output image light 334, and may function as a flat slab or curved slab with zero optical power for the output image light 334. The second ophthalmic lens 324 may be made of a suitable lens material, such as glass, plastic, or polymer, etc. For example, the lens material may include glass, PC, PMMA, PE, PET, PEN, PP, trivex, or a combination thereof. The second ophthalmic lens 324 may be fabricated via suitable processes, such as diamond turning, molding, casting, 3D printing, or a combination thereof.

The controller 225 may be communicatively coupled with the dimming device 205 included in the first ophthalmic lens 322 to control the operation state of the dimming device 205. The dimming device 205 may dynamically adjust the transmittance of the real-world light 262, thereby switching an artificial reality device including the display system 300 between operating in the VR mode and operating in the AR device, or between operating in the VR device and operating in the MR device. For example, when the controller 225 controls the dimming device 205 to operate in the dark state, the artificial reality device including the display system 300 may be configured to operate in the VR mode. When the controller 225 controls the dimming device 205 to operate in the clear state or intermediate state, the artificial reality device including the display system 300 may be configured to operate in the AR mode or MR mode. In some embodiments, the dimming device 205 may be configured to dynamically attenuate the real-world light 262 depending on the brightness of the real-world environment, thereby adjusting the brightness of the see-through view. For example, when the artificial reality device including the display system 300 operates in the AR mode or MR mode, the dimming device 205 may be configured to adjust the brightness of the see-through view to mitigate the brightness difference between the see-through view and the virtual image that are perceived by the user.

In some embodiments, the dimming device 205 may be a global dimmer. For example, when the artificial reality device including the display system 300 operates in the AR mode or MR mode, the display system 300 may provide a uniform contrast ratio of the see-through view and the virtual image over the aperture of the dimming device 205. In some embodiments, the dimming device 205 may be a regional or local dimmer. For example, when the artificial reality device including the display system 300 operates in the AR mode or MR mode, the display system 300 may provide different contrast ratios of the see-through view and the virtual image at different regions (or portions, areas) of the aperture of the dimming device 205. For example, the regional dimming device may include a plurality of dimming elements. One or more dimming elements may be activated in a region of the aperture of the dimming device 205 to attenuate the light from the real-world environment, while other dimming elements may be de-activated (or may remain de-activated) to provide no dimming effects. In some embodiments, dimming elements in a first region of the aperture may be controlled to provide a first attenuation to the light transmittance, and dimming elements in a second region of the aperture may be controlled to provide a different, second attenuation to the light transmittance.

For discussion purposes, FIG. 3A shows that the controller 225 controls the dimming device 205 included in the first ophthalmic lens 322 to operate in the dark state and, thus, the artificial reality device including the display system 300 operates in the VR mode. The dimming device 205 may substantially block the real-world light 262 from being transmitted through the first ophthalmic lens 322 toward the eye-box region 160. The second ophthalmic lens 324 may transmit the output image light 334 (representing a computer-generated virtual image) toward one or more exit pupils 157 in the eye-box region 160. Thus, the eye 159 located at the exit-pupil 157 may perceive an image 355 of the virtual object 302 only.

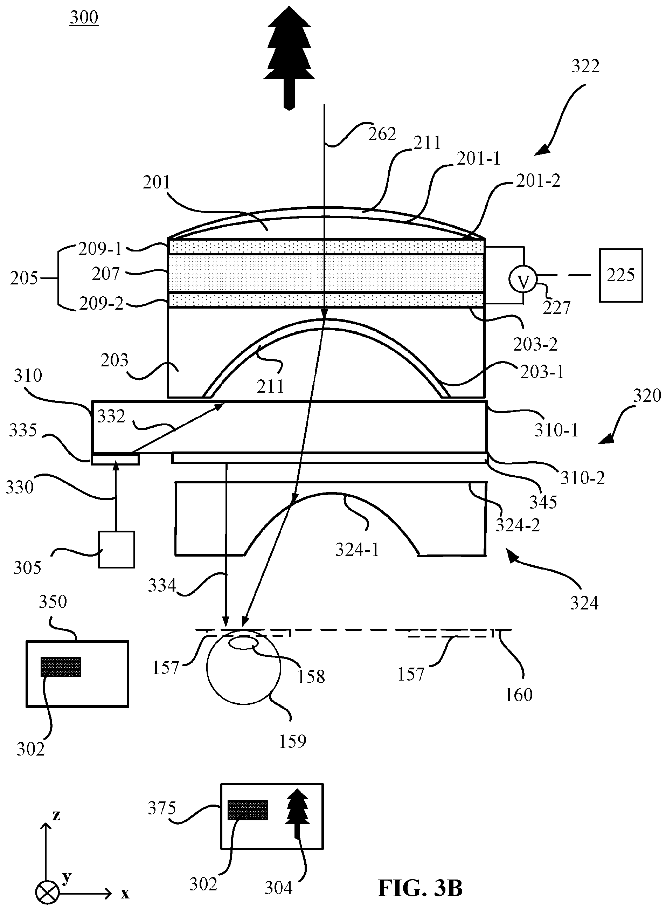

For discussion purposes, FIG. 3B shows that the controller 225 controls the dimming device 205 included in the first ophthalmic lens 322 to operate in the clear state or the intermediate state and, thus, the artificial reality device including the display system 300 operates in the AR mode or MR mode. The first ophthalmic lens 322 may transmit the real-world light 262 toward one or more exit pupils 157 in the eye-box region 160, and the second ophthalmic lens 324 may transmit the output image light 334 (representing a computer-generated virtual image) toward one or more exit pupils 157 in the eye-box region 160. Thus, the eye 159 located at the exit-pupil 157 may perceive an image 375, in which a virtual scene (e.g., the virtual object 302) is superimposed with a real-world scene (e.g., a real-world object 304). In some embodiments, the first ophthalmic lens 322 and the second ophthalmic lens 324 together may alter the real-world light 262 to provide vision correction to the user's eyesight, while transmitting the real-world light 262. In some embodiments, the first ophthalmic lens 322 may alter the real-world light 262 to provide vision correction to the user's eyesight while transmitting the real-world light 262, while the second ophthalmic lens 324 may function as a flat slab or curved slab with zero optical power for the real-world light 262. The first ophthalmic lens 322 may provide an adjustable light transmittance, and the second ophthalmic lens 324 may provide a fixed light transmittance.

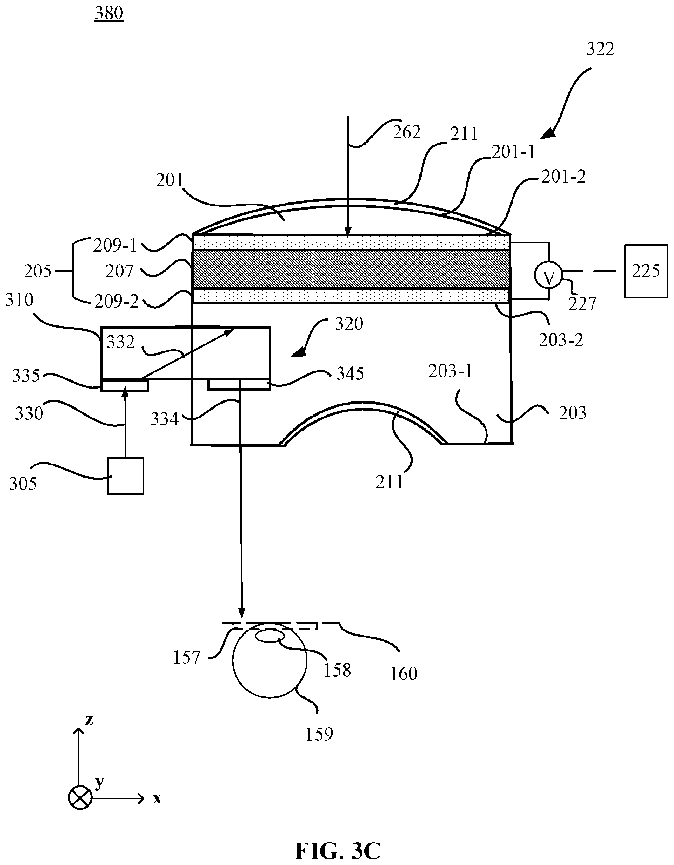

FIGs. 3A and 3B show that the light guide display assembly 320, the first ophthalmic lens 322, and the second ophthalmic lens 324 are individual components that are arranged in a stacked configuration. In some embodiments, the light guide display assembly 320 may be embedded in the first ophthalmic lens 322 or the second ophthalmic lens 324. FIG. 3C illustrates an x-z sectional view of a display system 380, according to an embodiment of the present disclosure. The display system 380 may be implemented in an artificial reality device for AR, VR, and/or MR applications, such as the artificial reality device 100 shown in FIGs. 1A-1D. For example, the display system 380 may be an embodiment of the display system 110L or 110R shown in FIGs. 1A and 1B. The display system 380 may include elements, structures, and/or functions that are the same as or similar to those included in the display system 300 shown in FIGs. 3A and 3B. Descriptions of the same or similar elements, structures, and/or functions can refer to the above descriptions rendered in connection with FIGs. 3A and 3B.

As shown in FIG. 3C, the display system 380 may include the first ophthalmic lens 322 with the embedded dimming device 205, and the light guide display assembly 320. In the embodiment shown in FIG. 3C, the light guide display assembly 320 and the first ophthalmic lens 322 may not be arranged in a stacked configuration. Instead, the light guide display assembly 320 may be at least partially embedded in the first ophthalmic lens 322. In some embodiments, the first ophthalmic lens 322 may alter the real-world light 262 to provide vision correction to the user's eyesight, while transmitting the real-world light 262 toward one or more exit pupils 157 in the eye-box region 160. In some embodiments, the first ophthalmic lens 322 (e.g., the second lens 203 included in the first ophthalmic lens 322) may alter the output image light 334 to provide vision correction to the user's eyesight while transmitting the output image light 334 toward one or more exit pupils 157 in the eye-box region 160. In some embodiments, the first ophthalmic lens 322 (e.g., the second lens 203 included in the first ophthalmic lens 322) may function as a flat slab or curved slab with zero optical power for the output image light 334.

The display system 300 shown in FIGs. 3A and 3B, and the display system 380 shown in FIG. 3C are for illustrative purposes to explain the implementation of a disclosed ophthalmic lens with the embedded dimming device 205 (e.g., the first ophthalmic lens 322) into a display system included in an artificial reality device. The light guide display assembly 320 shown in FIGs. 3A-3C are for illustrative purposes, and is an example of the image display components 120 shown in FIG. 1B. In some embodiments, not falling under the scope of the claimed subject matter, the display system 300 may include image display components other than the light guide display assembly 320. In some embodiments, not falling under the scope of the claimed subject matter, the display system 300 may include other types of display assembly other than the light guide display assembly 320. For example, in some embodiments, not falling under the scope of the claimed subject matter, the light guide display assembly 320 may be replaced by a holographic optical element ("HOE") display assembly.

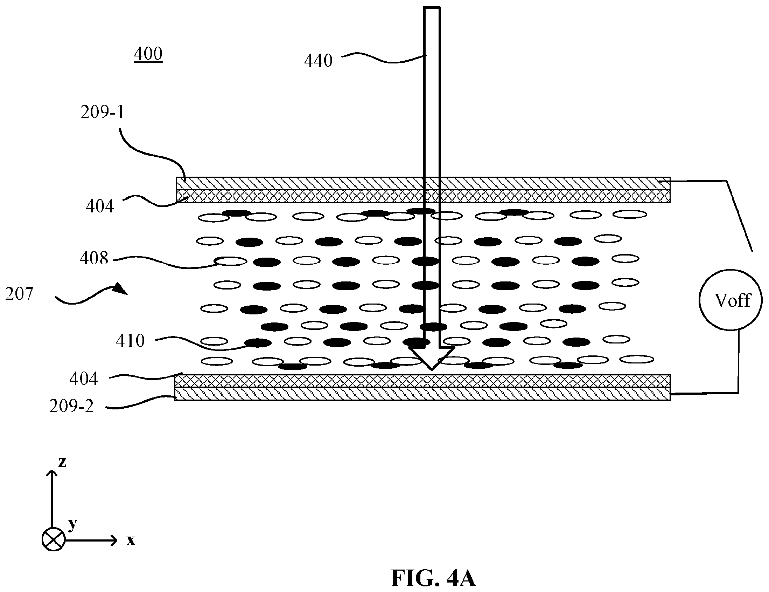

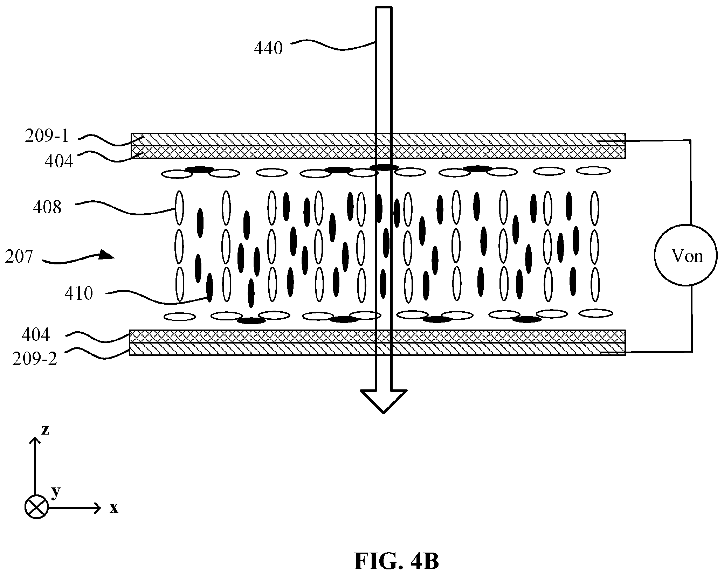

In the following, exemplary dimmers or dimming devices will be explained. The dimmer may attenuate an input light via a suitable dimming mechanisms, such as polarization, absorption, and/or scattering, etc. FIGs. 4A and 4B illustrate x-z sectional views of a dimmer or dimming device 400, according to an embodiment of the disclosure. The dimming device 400 may be an embodiment of the dimming device 205 shown in FIGs. 2A-3C. The dimming device 400 may be a guest-host type LC dimming device. As shown in FIG. 4A, the dimming device 400 may include electrode layers (or electric conduction layers) 209-1 and 209-2, and the dimming material layer 207 disposed between the electrode layers 209-1 and 209-2. Each electrode layer 209-1 or 209-2 may be provided with an alignment layer 404. The dimming material layer 207 may be disposed between the alignment layers 404. The alignment layers 404 provide alignments to the molecules included in the dimming material layer 207. In the embodiment shown in FIGs. 4A and 4B, the dimming material layer 207 may be a guest-host LC layer that includes a mixture of host LCs 408 and guest dyes 410 doped into the LCs 408. In the embodiment shown in FIG. 4A, the guest dyes 410 may include dichroic dyes (also referred to as 410 for discussion purposes) that are voltage-responsive or electric-field-responsive dyes, and the guest-host LC layer may be a voltage-driven guest-host LC layer.

The dichroic dyes 410 may be organic molecules having an anisotropic absorption. The absorption properties of the dichroic dyes 410 may depend on a relative orientation between an absorption axis of the dichroic dyes 410 (e.g., long axis or short axis of the dye molecules) and a polarization direction of an incident light. For example, the dichroic dyes 410 may relatively strongly absorb an incident light having a polarization direction that is parallel to an absorption axis (e.g., long axis or short axis) of the dye molecules, and relatively weakly absorb the incident light having a polarization direction that is perpendicular to the absorption axis (e.g., long axis or short axis) of the dye molecules. That is, the dichroic dyes 410 may provide a greater dimming effect to an incident light having a polarization direction parallel to the absorption axis of the dye molecules than to an incident light having a polarization direction perpendicular to the absorption axis. Thus, through varying the orientation of the dye molecules via, e.g., an electric field, the transmittance of the incident light 440 may be adjusted.

The LCs 408 in the dimming material layer 207 may have positive or negative dielectric anisotropy. For illustrative purposes, FIGs. 4A and 4B show that the LCs 408 have positive dielectric anisotropy (Δε>0). The dye molecules of the dichroic dye 410 may be aligned together with the LC molecules 408 in an x-axis direction at a voltage-off state. As shown in FIGs. 4A and 4B, when the directors of the LCs 408 change from a planar orientation to a perpendicular orientation along with an applied voltage V, the long molecular axis of the dye molecules may also change the orientation along with the LCs 408. In other words, the dye molecules may change from a planar orientation (a strong absorption state) at V=0 to a perpendicular orientation (a weak absorption state) at V≠0. Accordingly, the dimming device 400 may be switched from operating at a dark state at V=0 to operating at a clear state at V≠0. In some embodiments, the LCs 408 may have negative dielectric anisotropy (Δε<0), and the opaque state and the transparent state of the dimming device 400 may be reversed, e.g., the dimming device 400 may operate at the clear state at V=0 and operate at the dark state at V≠0. In some embodiments, the dimming device 400 may not include a polarizer. In some embodiments, the dimming device 400 may include a polarizer (not shown), e.g., a wire grid polarizer disposed at the upper electrode layer 209-1, and the upper electrode layer 209-1 may be disposed between the polarizer and the upper alignment layer 404.

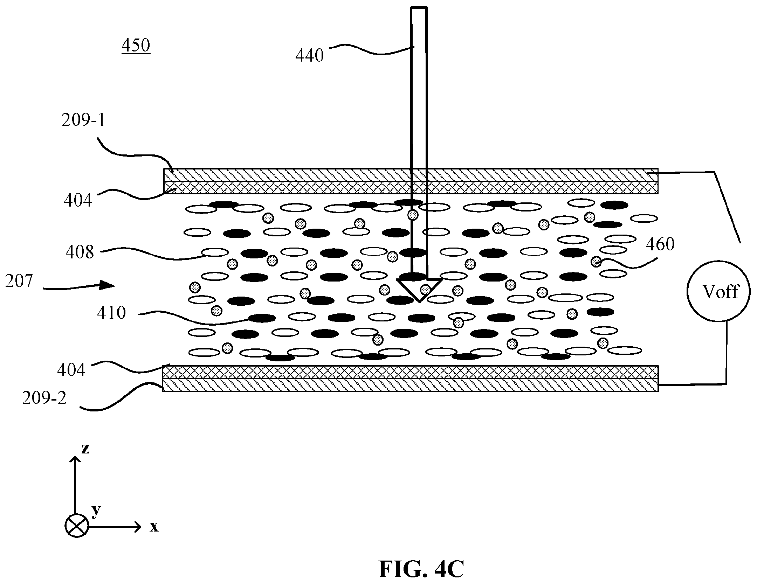

FIG. 4C illustrates an x-z sectional view of a dimmer or dimming device 450, according to an embodiment of the disclosure. The dimming device 450 may include elements, structures, and/or functions that are the same as or similar to those included in the dimming device 400 shown in FIGs. 4A and 4B. Descriptions of the same or similar elements, structures, and/or functions can refer to the above descriptions rendered in connection with FIGs. 4A and 4B. The dimming device 450 may be an embodiment of the dimming device 205 shown in FIGs. 2A-3C. The dimming device 450 may be a guest-host type LC dimming device including the dimming material layer 207 that includes the host LCs 408 and guest dyes doped into the LCs 408. In some embodiments, the guest dyes may include voltage-responsive or electric-field-responsive dyes (e.g., the dichroic dyes 410) and photo-responsive dyes 460. In some embodiments, the photo-responsive dyes 460 may include photochromic dyes, photodichroic dyes, or a combination thereof. As shown in FIG. 4C, the dimming device 450 may include the electrode layers (or electric conduction layers) 209-1 and 209-2 disposed at opposite sides of the dimming material layer 207, and the alignment layers 404 disposed at opposite surfaces of the dimming material layer 207. The alignment layers 404 are in direct contact with the dimming material layer 207.

In some embodiments, the photo-responsive dyes 460 may undergo reversible photo-isomerization between at least two stable states (or steady-states) having distinct light absorption effects. During the reversible photo-isomerization process, one or more physical properties of the photo-responsive dyes 460, such as absorption spectra, fluorescence emission, conjugation, electron conductivity, dipole interaction, and geometric shape may be changed when the photo-responsive dyes 460 are subject to an activating energy (e.g., an activating light irradiation). In some embodiments, the color of the photo-responsive dyes 460 may reversibly change depending on the presence or the absence of an activating light having a sufficiently high frequency, such as an ultraviolet ("UV") light, a blue light, and/or a violet light. For example, the photo-responsive dyes 460 may change from a clear steady-state (or referred to as "a clear state") to a dark steady-state (or referred to as "a dark state") when exposed to a UV light (or when the intensity of the UV light is greater than a predetermined intensity), and may revert back to the clear steady-state in the absence of the UV light (or when the intensity of the UV light is lower than a predetermined intensity). The dark steady-state may also be referred to as a colored steady-state, as the photo-responsive dyes 460 may exhibit a grey or dark color tint at the dark steady-state. The clear steady-state may also be referred to as a colorless steady-state, as the photo-responsive dyes 460 may be visually transparent at the clear steady-state.

In some embodiments, the process of reverting back to the clear steady-state may be expedited by exposing the photo-responsive dyes 460 to other types of activating energy, such as a heat or an electromagnetic radiation. For example, in some embodiments, the photo-responsive dyes 460 may take a longer time to return to the clear steady-state in a low temperature environment, and may not achieve a substantially dark steady-state in a high temperature environment, as the photo-induced (e.g., UV-induced) transition to the dark steady-state may be countered by a thermally-induced rapid reversion to the clear steady-state. Such photo-responsive dyes 460 may be referred to as thermally-reversible photo-responsive dyes, which may return to the clear steady-state at a rate that is dependent on a temperature (e.g., an ambient temperature). In some embodiments, the photo-responsive dyes 460 may absorb lights of different wavelengths to drive transitions to both the dark and clear steady-states, where the ambient temperature may have negligible or no effect on a transition speed and steady-state (e.g., dark and clear steady-states) properties. Such photo-responsive dyes 460 may be referred to as thermally-stable photo-responsive dyes. In some embodiments, one or more infrared ("IR"), visible, and/or UV light sources may be arranged adjacent the photo-responsive dyes 460, and energized as needed to irradiate the photo-responsive dyes 460. For example, in some embodiments, the thermally-stable photo-responsive dyes 460 may absorb an activating light having a predetermined wavelength to change from the clear steady-state to the dark steady-state, and absorb a light having a wavelength different from the predetermined wavelength of the activating light to return to the clear steady-state.

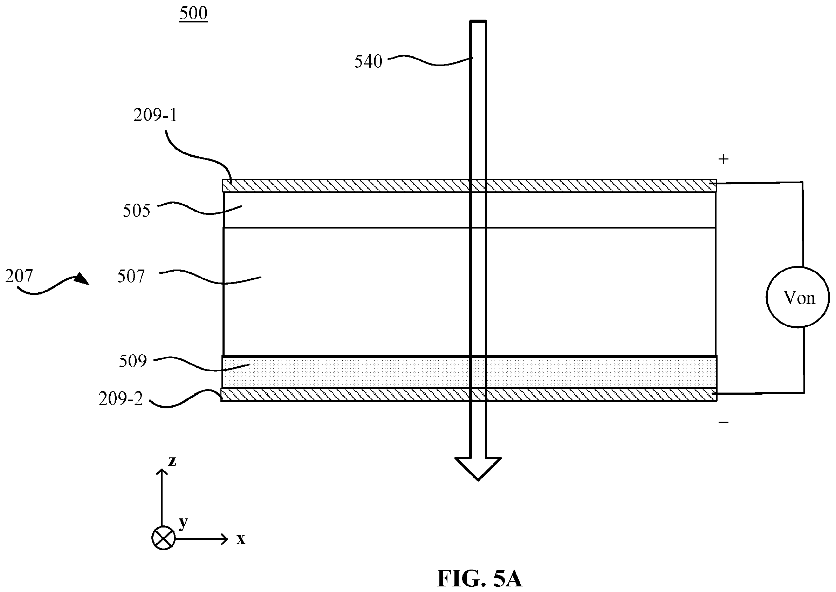

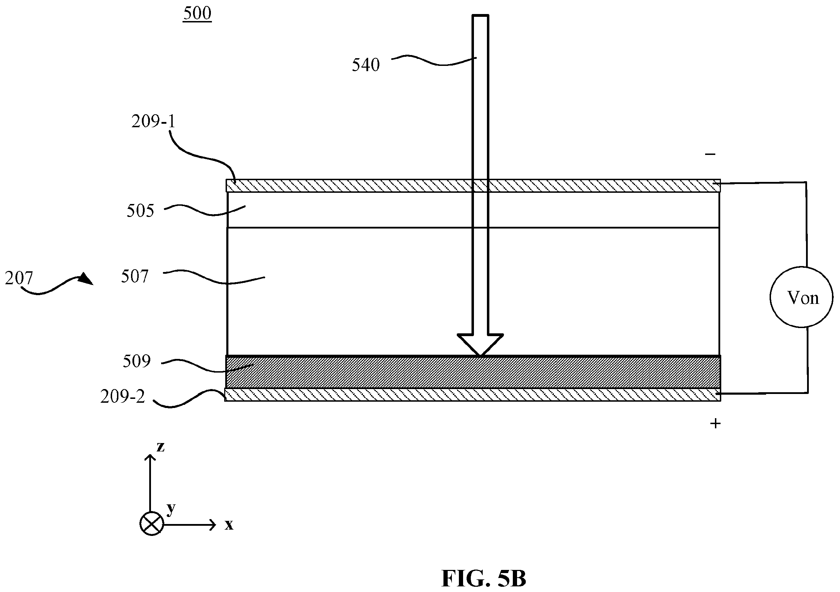

FIGs. 5A and 5B illustrate x-z sectional views of a dimmer or dimming device 500, according to an embodiment of the disclosure. The dimming device 500 may be an embodiment of the dimming device 205 shown in FIGs. 2A-3C. The dimming device 500 may be an electrochromic dimming device. As shown in FIG. 5A, the dimming device 500 may include the electrode layers 209-1 and 209-2 (collectively referred to as 209), and the dimming material layer 207 disposed between the electrode layers 209-1 and 209-2.

In the embodiment shown in FIG. 5A, the dimming material layer 207 may include at least one electrochromic layer configured with a light transmittance that is variable in response to a change in the applied electric field or current to create a visual effect. For discussion purpose, as shown in FIG. 5A, the dimming material layer 207 may include an ion storage layer 505, an ion-containing material layer 507 (e.g., an ion conductive layer or an electrolyte layer), and an electrochromic layer 509 arranged in a stacked configuration. The ion-containing material layer 507 may be disposed between the ion storage layer 505 and the electrochromic layer 509. The electrochromic layer 509 may include an electrochromic material, such as an electrochromic material of organic small molecules, an electrochromic material including a conducting polymer, or an electrochromic material including transition metal oxides, etc. The electrochromic material may reversibly alter its optical properties following electrochemical oxidation and reduction in response to an applied potential (e.g., an applied voltage). For example, a light transmittance of the electrochromic layer 509 may change upon the oxidation or reduction of the electrochromic material.

The ion storage layer 505 may function as a charge storage film that attracts and stores the oppositely charged counterparts to the ions that activate or deactivate the electrochromic layer 509. In some embodiments, the ion storage layer 505 may be configured to match the charge balance with the electrochromic layer upon the reversible oxidation/reduction reaction for color-switching of the electrochromic material contained in the electrochromic layer 509. For example, in some embodiments, the ion storage layer 505 may include an electrochromic material having color-switching reaction characteristics that are different from the electrochromic material included in the electrochromic layer 509. For example, when the electrochromic layer 509 includes a reductive electrochromic material, the ion storage layer 505 may include an oxidative electrochromic material. In some embodiments, the ion-containing material layer 507 may function as a medium for transporting ions between the ion storage layer 505 and the electrochromic layer 509. In some embodiments, the ion-containing material layer 507 may effectively block the electronic current while allowing the ions (typically protons (H⁺) or lithium ions (Li⁺)) to pass through.

During the operation of the dimming device 500, in some embodiments, as shown in FIG. 5A, a positive voltage may be applied to the electrode layer 209-1 and a negative voltage (or zero voltage) may be applied to the electrode layer 209-2. The direction of the external electric field generated in the dimming material layer 207 may along the -z-axis direction in FIG. 5A. The generated electric field may cause charge compensating ions, such as lithium, sodium, or hydrogen ions, to pass from the ion storage layer 505 into the electrochromic layer 509 via the ion-containing material layer 507. Meanwhile, electrons may be transported along the external circuit, and injected into the electrochromic layer 509. The injected electrons may yield an electrochemical reduction of the electrochromic material included in the electrochromic layer 509, resulting in a colorless (e.g., clear) state of the dimming device 500.

In some embodiments, as shown in FIG. 5B, a negative voltage (or zero voltage) may be applied to the electrode layer 209-1 and a positive may be applied to the electrode layer 209-2. The direction of the external electric field generated in the dimming material layer 207 may along the +z-axis direction in FIG. 5B. The generated electric field may cause the charge compensating ions to flow out of the electrochromic electrode layer 509, and flow back to the ion storage layer 505 via the ion-containing material layer 507. Meanwhile, the polarity reversal may cause the electrons to flow out of the electrochromic electrode layer 509, flow along the external circuit, and flow into the ion storage layer 505. The extraction of the electrons may result in an electrochemical oxidation of the electrochromic material included in the electrochromic layer 509, resulting in a colored (e.g., dark) state of the dimming device 500. Referring to FIGs. 5A and 5B, through reversing the polarity of the voltage applied to the dimming device 500, the dimming device 500 may be switchable between the colorless state and the colored state.

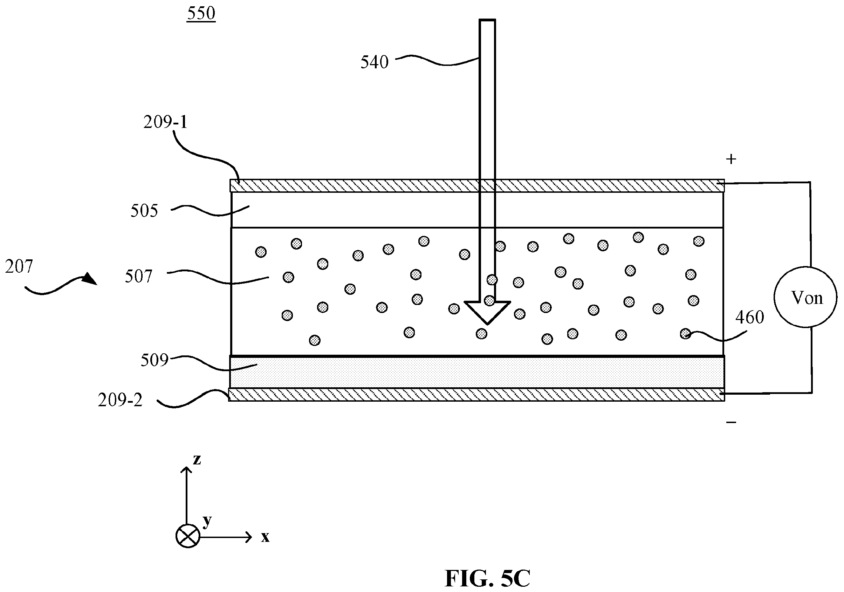

FIG. 5C illustrates an x-z sectional view of a dimmer or dimming device 550, according to an embodiment of the disclosure. The dimming device 550 may be an embodiment of the dimming device 205 shown in FIGs. 2A-3C. The dimming device 550 may be an electrochromic dimming device or a suspended particle dimming device. The dimming device 550 may include elements, structures, and/or functions that are the same as or similar to those included in the dimming device 500 shown in FIGs. 5A and 5B. Descriptions of the same or similar elements, structures, and/or functions can refer to the above descriptions rendered in connection with FIGs. 5A and 5B.

In the embodiment shown in FIG. 5C, the dimming material layer 207 may be configured to also include the photo-responsive dyes 460, such as photochromic dyes, photodichroic dyes, or a combination thereof. The photo-responsive dyes 460 may be doped into at least one of the ion storage layer 505, the ion-containing material layer 507, or the electrochromic layer 509. For discussion purposes, FIG. 5C shows that the photo-responsive dyes 460 are doped into the ion-containing material layer 507. In some embodiments, the photo-responsive dyes 460 may be doped into the electrochromic layer 509. In some embodiments, the photo-responsive dyes 460 may be doped into the ion storage layer 505.

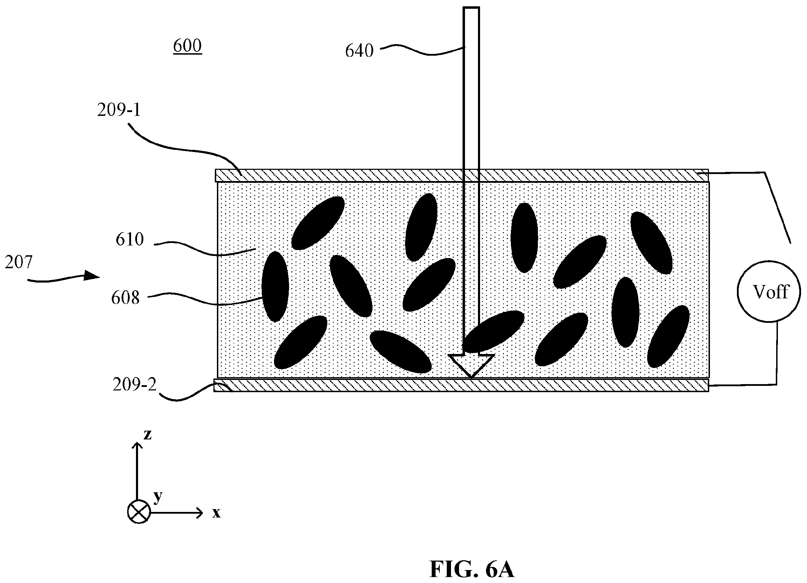

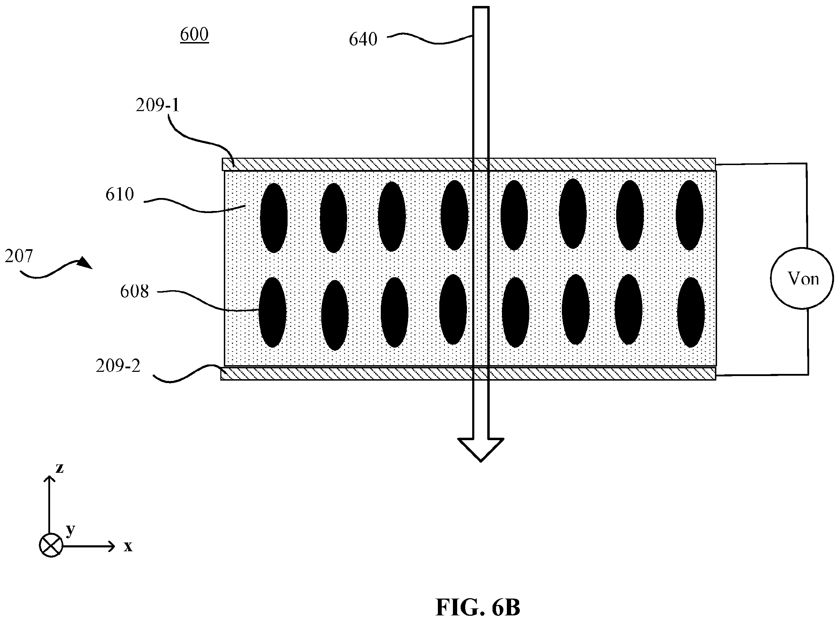

FIGs. 6A and 6B illustrate x-z sectional views of a dimmer or dimming device 600, according to an embodiment of the disclosure. The dimming device 600 may be an embodiment of the dimming device 205 shown in FIGs. 2A-3C. The dimming device 600 may be an electrophoretic dimming device. As shown in FIG. 6A, the dimming device 600 may include the electrode layers 209-1 and 209-2, and the dimming material layer 207 disposed between the two electrode layers 209-1 and 209-2. In the embodiment shown in FIG. 6A, the dimming material layer 207 may include microscopic particles 608 suspended in a liquid suspension or a polymer film 610. The particles 608 may be needle-shaped, rod-shaped, or lath-shaped, etc.

In a voltage-off state, as shown in FIG. 6A, the particles 608 suspended in the liquid suspension or film 610 may be randomly distributed or disordered due to Brownian movement, and a light 640 incident on the dimming material layer 207 may be absorbed and/or scattered. Thus, the light 640 incident on the dimming material layer 207 may not be transmitted through, and the dimming device 600 may operate in a dark state. In a voltage-on state, as shown in FIG. 6B, when the applied voltage is sufficiently high, the particles 608 may be uniformly oriented in the electric field direction, e.g., a z-axis direction in FIG. 6B, allowing the incident light 640 to be substantially transmitted therethrough. Thus, the dimming device 600 may operate in a clear state. After removing the voltage, the particles 608 may move back into a random pattern and substantially block the incident light 640. Thus, through varying the applied voltage, the light transmittance of the dimming device 600 may be tunable.

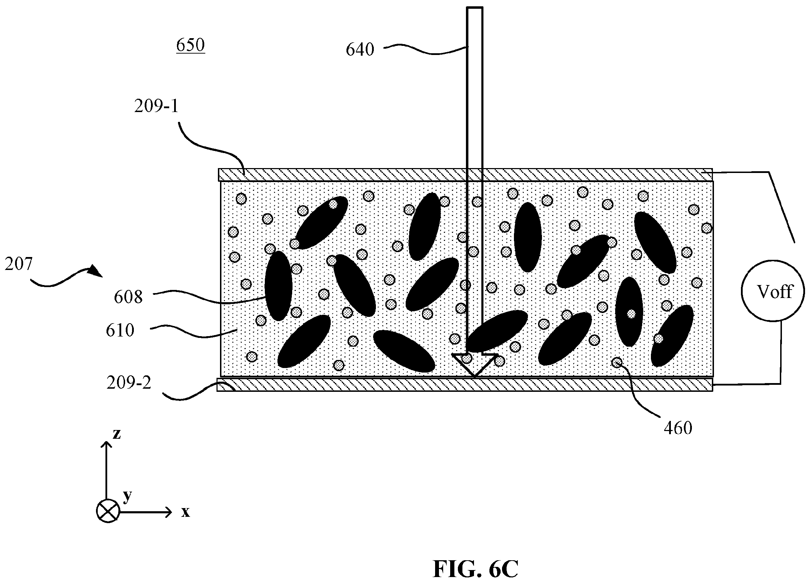

FIG. 6C illustrates an x-z sectional view of a dimmer or dimming device 650, according to an embodiment of the disclosure. The dimming device 650 may be an embodiment of the dimming device 205 shown in FIGs. 2A-3C. The dimming device 650 may be an electrochromic dimming device or a suspended particle dimming device. The dimming device 650 may include elements, structures, and/or functions that are the same as or similar to those included in the dimming device 600 shown in FIGs. 6A and 6B. Descriptions of the same or similar elements, structures, and/or functions can refer to the above descriptions rendered in connection with FIGs. 6A and 6B. In the embodiment shown in FIG. 6C, the dimming material layer 207 may be configured to also include the photo-responsive dyes 460, such as photochromic dyes, photodichroic dyes, or a combination thereof. The photo-responsive dyes 460 may be doped into the liquid suspension or polymer film 610, which may further enhance the dimming effect of the dimming device 650.

In some embodiments, the present disclosure provides an ophthalmic lens. The ophthalmic lens includes a first lens having a first flat surface and a first non-flat surface. The ophthalmic lens also includes a second lens having a second flat surface and a second non-flat surface. The ophthalmic lens also includes a first electrode layer disposed at the first flat surface and a second electrode layer disposed at the second flat surface. The ophthalmic lens also includes a dimming material disposed between the first electrode layer and the second electrode layer, and configured to provide an adjustable dimming effect.

In some embodiments, the first non-flat surface is a convex surface, and the second non-flat surface is a concave surface. In some embodiments, each of the first electrode layer and the second electrode layer includes at least one of indium tin oxide ("ITO"), Al-doped zinc oxide ("AZO"), graphene, poly(3,4-ethylenedioxythiophene): poly(styrene-sulfonate) ("PEDOT:PSS"), carbon nanotubes, or silver nanowires. In some embodiments, the dimming material includes an electrically tunable dimming material. In some embodiments, the dimming material also includes a non-electrically tunable dimming material. In some embodiments, the non-electrically tunable dimming material includes at least one of a photochromic material, a photodichroic material, or a thermochromic material.

In some embodiments, the present disclosure provides an ophthalmic lens. The ophthalmic lens includes a first lens having a first surface and a second surface, at least one of the first surface or the second surface being a first non-flat surface. The ophthalmic lens includes a second lens having a third surface and a fourth surface, at least one of the third surface or the fourth surface being a second non-flat surface. The ophthalmic lens includes a dimming device disposed between the first lens and the second lens, and configured to provide an adjustable dimming effect. The dimming device includes a dimming material, a first electrode layer disposed at a first side of the dimming material facing the first lens, and a second electrode layer disposed at a second side of the dimming material facing the second lens.

In some embodiments, the second surface and the third surface are flat surfaces, the first surface is a convex surface, and the fourth surface is a concave surface. In some embodiments, the first electrode layer and the second electrode layers are flat electrode layers disposed at the second surface and the third surface, respectively. In some embodiments, each of the first surface, the second surface, the third surface, and the fourth surface is a curved surface. In some embodiments, the first electrode layer and the second electrode layers are curved electrode layers disposed at the second surface and the third surface, respectively. In some embodiments, each of the first surface, the second surface, and the third surface is a curved surface, and the fourth surface is a flat surface. In some embodiments, the first electrode layer and the second electrode layer are curved electrode layers disposed at the second surface and the third surface, respectively. In some embodiments, each of the first electrode layer and the second electrode layer includes at least one of indium tin oxide ("ITO"), Al-doped zinc oxide ("AZO"), graphene, poly(3,4-ethylenedioxythiophene): poly(styrene-sulfonate) ("PEDOT:PSS"), carbon nanotubes, or silver nanowires. In some embodiments, the dimming material includes an electrically tunable dimming material. In some embodiments, the dimming material includes a non-electrically tunable dimming material.

In some embodiments, the present disclosure provides a system. The system includes a light source configured to output an image light. The system also includes a light guide coupled with an in-coupling element and an out-coupling element, and configured to guide the image light to an eye-box region of the system, the light guide having a first side facing the eye-box region and a second side opposite to the first side. The system also includes an ophthalmic lens disposed at the second side of the light guide. The ophthalmic lens includes a first lens having at least one non-flat surface. The ophthalmic lens includes a second lens having at least one non-flat surface. The ophthalmic lens includes a dimming device disposed between the first lens and the second lens, and configured to provide an adjustable dimming effect. The dimming device includes a dimming material, a first electrode layer disposed at a first side of the dimming material facing the first lens, and a second electrode layer disposed at a second side of the dimming material facing the second lens.

In some embodiments, the ophthalmic lens is a first ophthalmic lens, and the system further includes a second ophthalmic lens disposed at the first side of the light guide. In some embodiments, the first ophthalmic lens is configured to provide an adjustable light transmittance, and the second ophthalmic lens is configured to provide a fixed light transmittance. In some embodiments, the dimming material includes an electrically tunable dimming material.

The foregoing description of the embodiments of the present disclosure have been presented for the purpose of illustration. It is not intended to be exhaustive or to limit the disclosure to the precise forms disclosed. Persons skilled in the relevant art can appreciate that modifications and variations are possible in beam of the above disclosure.

Some portions of this description may describe the embodiments of the present disclosure in terms of algorithms and symbolic representations of operations on information. These operations, while described functionally, computationally, or logically, may be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware and/or software modules, alone or in combination with other devices. In one embodiment, a software module is implemented with a computer program product including a computer-readable medium containing computer program code, which can be executed by a computer processor for performing any or all of the steps, operations, or processes described. In some embodiments, a hardware module may include hardware components such as a device, a system, an optical element, a controller, an electrical circuit, a logic gate, etc.

Embodiments of the present disclosure may also relate to an apparatus for performing the operations herein. This apparatus may be specially constructed for the specific purposes, and/or it may include a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. The non-transitory computer-readable storage medium can be any medium that can store program codes, for example, a magnetic disk, an optical disk, a read-only memory ("ROM"), or a random access memory ("RAM"), an Electrically Programmable read only memory ("EPROM"), an Electrically Erasable Programmable read only memory ("EEPROM"), a register, a hard disk, a solid-state disk drive, a smart media card ("SMC"), a secure digital card ("SD"), a flash card, etc. Furthermore, any computing systems described in the specification may include a single processor or may be architectures employing multiple processors for increased computing capability. The processor may be a central processing unit ("CPU"), a graphics processing unit ("GPU"), or any processing device configured to process data and/or performing computation based on data. The processor may include both software and hardware components. For example, the processor may include a hardware component, such as an application-specific integrated circuit ("ASIC"), a programmable logic device ("PLD"), or a combination thereof. The PLD may be a complex programmable logic device ("CPLD"), a field-programmable gate array ("FPGA"), etc.

Further, when an embodiment illustrated in a drawing shows a single element, it is understood that the embodiment or an embodiment not shown in the figures but within the scope of the present disclosure may include a plurality of such elements. Likewise, when an embodiment illustrated in a drawing shows a plurality of such elements, it is understood that the embodiment or an embodiment not shown in the figures but within the scope of the present disclosure may include only one such element. The number of elements illustrated in the drawing is for illustration purposes only, and should not be construed as limiting the scope of the embodiment. Moreover, unless otherwise noted, the embodiments shown in the drawings are not mutually exclusive, and they may be combined in any suitable manner. For example, elements shown in one figure/embodiment but not shown in another figure/embodiment may nevertheless be included in the other figure/embodiment. In any optical device disclosed herein including one or more optical layers, films, plates, or elements, the numbers of the layers, films, plates, or elements shown in the figures are for illustrative purposes only. In other embodiments not shown in the figures, which are still within the scope of the present disclosure, the same or different layers, films, plates, or elements shown in the same or different figures/embodiments may be combined or repeated in various manners to form a stack.

Various embodiments have been described to illustrate the exemplary implementations. Based on the disclosed embodiments, a person having ordinary skills in the art may make various other changes, modifications, rearrangements, and substitutions without departing from the scope of the present disclosure. Thus, while the present disclosure has been described in detail with reference to the above embodiments, the present disclosure is not limited to the above described embodiments. The present disclosure may be embodied in other equivalent forms without departing from the scope of the present disclosure. The scope of the present disclosure is defined in the appended claims.

## Claims

1. A system, comprising:
a light source (305) configured to output an image light;
a light guide (310) coupled with an in-coupling element (335) and an out-coupling element (345), and configured to guide the image light to an eye-box region of the system, the light guide having a first side facing the eye-box region and a second side opposite to the first side; and a dimming device (205), **characterised in that** the system further comprises;
an ophthalmic lens (322) disposed at the second side of the light guide, the ophthalmic lens including:
a first lens (201) having at least one first non-flat surface;
a second lens (203) having at least one second non-flat surface; and
wherein the dimming device (205) is disposed between the first lens and the second lens, and
configured to provide an adjustable dimming effect,
wherein the dimming device includes a dimming material (207), a first electrode layer (209-1) disposed at a first side of the dimming material facing the first lens, and a second electrode layer (209-2) disposed at a second side of the dimming material facing the second lens.

2. The system of claim 1, wherein the ophthalmic lens is a first ophthalmic lens, and the system further includes a second ophthalmic lens disposed at the first side of the light guide.

3. The system of claim 2, wherein the first ophthalmic lens is configured to provide an adjustable light transmittance, and the second ophthalmic lens is configured to provide a fixed light transmittance.

4. The system of any preceding claim, wherein the dimming material includes an electrically tunable dimming material and a non-electrically tunable dimming material.

## Patentansprüche

1. Ein System, das Folgendes beinhaltet:
eine Lichtquelle (305), die konfiguriert ist, um ein Bildlicht auszugeben;
einen Lichtleiter (310), der mit einem Einkoppelelement (335) und einem Auskoppelelement (345) gekoppelt ist, und konfiguriert ist, um das Bildlicht zu einem Eyebox-Bereich des Systems zu leiten, wobei der Lichtleiter eine erste Seite, die dem Eyebox-Bereich zugewandt ist, und eine zweite Seite, die der ersten Seite gegenüberliegt, aufweist; und
eine Dimmvorrichtung (205), **dadurch gekennzeichnet, dass** das System ferner Folgendes beinhaltet:
eine ophthalmische Linse (322), die an der zweiten Seite des Lichtleiters angeordnet ist, wobei die ophthalmische Linse Folgendes umfasst:
eine erste Linse (201), die mindestens eine erste nicht flache Oberfläche aufweist;
eine zweite Linse (203), die mindestens eine zweite nicht flache Oberfläche aufweist; und wobei die Dimmvorrichtung (205) zwischen der ersten Linse und der zweiten Linse angeordnet ist, und konfiguriert ist, um einen einstellbaren Dimmeffekt bereitzustellen,
wobei die Dimmvorrichtung ein Dimmmaterial (207), eine erste Elektrodenschicht (209-1), die an einer ersten Seite des Dimmmaterials angeordnet ist, die der ersten Linse zugewandt ist, und eine zweite Elektrodenschicht (209-2), die an einer zweiten Seite des Dimmmaterials angeordnet ist, die der zweiten Linse zugewandt ist, beinhaltet.

2. System gemäß Anspruch 1, wobei die ophthalmische Linse eine erste ophthalmische Linse ist und das System ferner eine zweite ophthalmische Linse umfasst, die an der ersten Seite des Lichtleiters angeordnet ist.

3. System gemäß Anspruch 2, wobei die erste ophthalmische Linse konfiguriert ist, um eine einstellbare Lichtdurchlässigkeit bereitzustellen, und die zweite ophthalmische Linse konfiguriert ist, um eine feste Lichtdurchlässigkeit bereitzustellen.

4. System gemäß einem der vorhergehenden Ansprüche, wobei das Dimmmaterial ein elektrisch abstimmbares Dimmmaterial und ein nicht elektrisch abstimmbares Dimmmaterial umfasst.

## Revendications

1. Un système, comprenant :
une source de lumière (305) configurée pour délivrer en sortie une lumière d'image ;
un guide de lumière (310) couplé à un élément de couplage d'entrée (335) et à un élément de couplage de sortie (345), et configuré pour guider la lumière d'image vers une région de champ visuel du système, le guide de lumière ayant un premier côté faisant face à la région de champ visuel et un deuxième côté opposé au premier côté ; et
un dispositif de gradation (205), **caractérisé en ce que** le système comprend en outre :
une lentille ophtalmique (322) disposée au niveau du deuxième côté du guide de lumière, la lentille ophtalmique incluant :
une première lentille (201) ayant au moins une première surface non plate ;
une deuxième lentille (203) ayant au moins une deuxième surface non plate ; et dans lequel le dispositif de gradation (205) est disposé entre la première lentille et la deuxième lentille, et est configuré pour fournir un effet de gradation ajustable,
dans lequel le dispositif de gradation inclut un matériau de gradation (207), une première couche d'électrode (209-1) disposée au niveau d'un premier côté du matériau de gradation faisant face à la première lentille, et une deuxième couche d'électrode (209-2) disposée au niveau d'un deuxième côté du matériau de gradation faisant face à la deuxième lentille.

2. Le système de la revendication 1, dans lequel la lentille ophtalmique est une première lentille ophtalmique, et le système inclut en outre une deuxième lentille ophtalmique disposée au niveau du premier côté du guide de lumière.

3. Le système de la revendication 2, dans lequel la première lentille ophtalmique est configurée pour fournir une transmittance de lumière ajustable, et la deuxième lentille ophtalmique est configurée pour fournir une transmittance de lumière fixe.

4. Le système de n'importe quelle revendication précédente, dans lequel le matériau de gradation inclut un matériau de gradation à variation électrique et un matériau de gradation à variation non électrique.
